# EUROPÄISCHE PATENTSCHRIFT

(11) **EP 3 384 234 B1**
(45) Veröffentlichungstag und Bekanntmachung des Hinweises auf die Patenterteilung: **08.01.2020**
(21) Anmeldenummer: 16798164.6
(22) Anmeldetag: 18.11.2016
(51) Int. Cl.: G01C 15/00, F16D 3/40, F16C 33/10, B29C 45/14

(54) **VERFAHREN ZUR HERSTELLUNG EINER PENDELANORDNUNG EINER PENDELLASERVORRICHTUNG SOWIE PENDELLASERVORRICHTUNG**
METHOD FOR MANUFACURING A PENDULUM ARRANGEMENT OF A PENDULUM LASER APPARATUS AND PENDULUM LASER APPARATUS
PROCÉDÉ DE FABRICATION D'UN AGENCEMENT PENDULAIRE D'UN DISPOSITIF LASER PENDULAIRE ET DISPOSITIF LASER PENDULAIRE

(30) Priorität: 30.11.2015 DE 102015223643
(43) Veröffentlichungstag der Anmeldung: 10.10.2018
(73) Patentinhaber: Robert Bosch GmbH, 70442 Stuttgart (DE)
(72) Erfinder: GEISE, Stephan, 59602 Ruethen (DE)
(86) Internationale Anmeldenummer: PCT/EP2016/078098
(87) Internationale Veröffentlichungsnummer: WO 2017/093044

(56) Entgegenhaltungen:
- EP-A2- 0 160 319
- WO-A1-2016/156012
- WO-A2-2010/108718
- DE-A1-102008 041 782
- JP-A- H07 158 655

## Beschreibung

### Stand der Technik

Die Erfindung betrifft ein Verfahren zur Herstellung einer Pendelanordnung einer Pendellaservorrichtung mittels Kunststoff-Spritzgießtechnik. Des Weiteren betrifft die Erfindung eine derartige Pendellaservorrichtung. Pendellaservorrichtungen dienen der Erzeugung von optischen Markierungen, insbesondere Lasermarkierungen, im Rahmen von Nivellier-, Ausricht-, Vermessungs- und/oder Markierungsaufgaben.

Aus DE 10 2007 039 343 A1 ist der allgemeine Aufbau einer Pendellaservorrichtung bekannt. Konkrete Ausführungsformen von Pendellaservorrichtungen sind aus DE 10 2007 039 340 A1 sowie aus DE 10 2009 016 169 A1 und DE 421 08 24 A1 bekannt. Ferner beschreiben Dokumente des Standes der Technik einzelne Elemente von Pendellaservorrichtungen, insbesondere Justiermittel zum Verschwenken einer Lotlichtquelle (DE 10 2008 041 782 A1), den konzeptionellen Aufbau eines Mehr- Linien-Lasergeräts (WO 2010/108718 A2), Kreuzgelenke (EP 0 160 319 A2) bzw. Kreuzgelenke mit Kugellagern (JP H07 158655 A).

Bei aus dem Stand der Technik bekannten Pendellaservorrichtungen wird die Montage der für die Funktionalität der Pendellaservorrichtung zentralen Pendelanordnung, insbesondere des verwendeten Pendels, in einer Vielzahl von Einzelschritten und unter Verwendung einer Vielzahl separat gefertigter Einzelkomponenten durchgeführt. Dabei bestehen die Komponenten typischerweise aus mechanisch zerspantem Gussmetall, die durch geschliffene Stifte mit Kugellagern in den dafür vorgesehenen Führungen der Bauteile, insbesondere einer Aufhängung, pendelbar befestigt werden. Um eine ausreichende Genauigkeit der Ausrichtung eines von der Pendellaservorrichtung ausgesendeten optischen Nivelliersignals zu gewährleisten, müssen die verwendeten Komponenten, insbesondere die Kugellager, deren Führungen sowie die Aufhängung, hochgenau bearbeitet werden, damit das die optischen Komponenten wie Laser aufnehmende Pendel präzise gehalten und austariert wird.

### Offenbarung der Erfindung

Das vorgeschlagene Herstellungsverfahren für eine Pendelanordnung einer Pendellaservorrichtung umfasst zumindest
- einen ersten Verfahrensschritt, bei dem ein Kreuzgelenk eines Pendels der Pendelanordnung mittels Kunststoff-Spritzgießtechnik unter Formung zweier orthogonaler, zumindest teilweise mikrostrukturierter Wellen gefertigt wird,
- einen zweiten Verfahrensschritt, bei dem zumindest zwei Lagerschalen auf die zumindest teilweise mikrostrukturierten Bereiche zumindest einer Welle des Kreuzgelenks platziert werden, sowie
- einen dritten Verfahrensschritt, bei dem ein Optikträger des Pendels der Pendelanordnung durch Umspritzen zumindest zweier, eine Welle des Kreuzgelenks umgebenden Lagerschalen mittels Kunststoff-Spritzgießtechnik einstückig mit den Lagerschalen gefertigt und um die eine Welle drehbar an das Kreuzgelenk angebunden wird.

Pendellaservorrichtungen dienen der Erzeugung von optischen Markierungen, insbesondere Lasermarkierungen, im Rahmen von Nivellier-, Ausricht-, Vermessungs- und/oder Markierungsaufgaben, wie sie insbesondere im handwerklichen Bereich auftreten, beispielsweise bei einem Innenausbau von Gebäuden, bei Bauarbeiten, bei der Anbringung von Markierungen an Wänden oder dergleichen. Prinzipiell erlauben Pendellaservorrichtungen Lasermarkierungen zu erzeugen, insbesondere auf Objekte zu projizieren, die eine von einer Ausrichtung von Böden, Decken, Wänden oder anderen Gegenständen, beispielsweise der vertikalen Wand eines Schranks, insbesondere aber auch eine von der Ausrichtung des Gehäuses der Pendellaservorrichtung, unabhängige Referenz darstellen.

Grundsätzlich erlauben Pendellaservorrichtungen in zumindest einem Betriebszustand eine am Gravitationsfeld, d.h. eine an der Richtung der Schwerkraft oder eine bezogen auf das Lot, ausgerichtete Lasermarkierung als Referenz zu erzeugen. Insbesondere kann die erzeugte Lasermarkierung bezogen auf die Pendellaservorrichtung beispielsweise horizontal und/oder vertikal und/oder unter einem anderen definierten Winkel zum Lot ausgerichtet sein.

Dazu weisen Pendellaservorrichtungen typischerweise ein Gehäuse mit mindestens einer Öffnung, insbesondere einem Fenster auf, wobei in dem Gehäuse zumindest eine Pendelanordnung angeordnet ist. Die Pendelanordnung, insbesondere das umfasste Pendel der Pendelanordnung, ist zum Halten sowie Ausrichten mindestens einer Lasereinheit mittels einer Laseraufnahme vorgesehen, wobei die Laseraufnahme - und damit auch die Lasereinheit - mittels des Pendels der Pendelanordnung im Wesentlichen unabhängig von einer Ausrichtung des Gehäuses am Lot frei selbst-ausrichtbar, insbesondere allseitig pendelbar oder schwingend, ausgebildet ist. Die Lasereinheit dient bei deren Betrieb der Erzeugung zumindest einer Lasermarkierung auf einem Objekt.

Die Pendelanordnung der Pendellaservorrichtung verfügt über eine am Gehäuse oder eine an einem mit dem Gehäuse verbundenen Teil angeordnete Pendelaufhängung, die eine lotrechte Ausrichtung des an der Pendelaufhängung pendelbar angeordneten Pendels im Gravitationsfeld und im Wesentlichen unabhängig von der Ausrichtung des Gehäuses erlaubt. Die lotrechte Ausrichtung des Pendels kann beispielsweise unter Verwendung einer kardanischen Lagerung realisiert sein. Unter "im Wesentlichen unabhängig von einer Ausrichtung des Gehäuses" soll verstanden werden, dass gegebenenfalls ein Winkelbereich für die Ausrichtung des Gehäuses existiert, auf den die Funktion des Pendels, insbesondere dessen präzise Ausrichtung am Lot, beschränkt ist. Insbesondere umfasst dieser Winkelbereich beispielsweise 2° bis 15° von der Lotrechten, typischerweise 5° bis 8°. Um die Einschwingdauer des pendelnd und im Rahmen des technisch Möglichen möglichst reibungsfrei aufgehängten Pendels zu verkürzen, ohne die Einstellgenauigkeit der Endposition des Pendels im Gravitationsfeld zu verringern, kann das Pendel eine Wirbelstromdämpfung nach dem Prinzip des Waltenhof'schen Pendels aufweisen. Vorteilhaft kann sich das Pendel der Pendellaservorrichtung - und damit auch die Laseraufnahme samt Lasereinheit - nach dem Aufstellen der Pendellaservorrichtung oder nach einem Stoß gegen die Pendellaservorrichtung innerhalb kurzer Zeit mit einer hohen Genauigkeit im Gravitationsfeld der Erde selbsttätig ausrichten.

Die Laseraufnahme dient der Aufnahme zumindest einer Lasereinheit. In einer Ausführungsform ist die Laseraufnahme einstückig, insbesondere stoff-, kraft- und/oder formschlüssig mit dem Pendel, insbesondere einem Optikträger als Bestandteil des Pendels, realisiert. Ferner dient die Laseraufnahme der Ausrichtung der Lasereinheit in Bezug auf eine Vorzugsrichtung, und somit auch in Bezug auf das Pendel der Pendellaservorrichtung, sowie deren mittelbarer Befestigung an dem Pendel.

Die Lasereinheit weist zumindest eine Lichtquelle zur Erzeugung einer Lasermarkierung auf einem Objekt auf, beispielsweise einen Laser, einen Halbleiterlaser oder eine Laserdiode. Ebenfalls kann die Lasereinheit strahlformende und/oder strahllenkende und/oder die Eigenschaften der Laserstrahlung beeinflussende optische Element, insbesondere beispielsweise Linsen, Filter, diffraktive Elemente, Spiegel, Reflektoren, optisch transparente Scheiben oder dergleichen, aufweisen. Insbesondere Zylinderlinsen können genutzt werden, um technisch einfach eine Auffächerung des von der Lichtquelle emittierten Laserstrahls zu einer Laserebene zu realisieren, sodass bei Projektion dieser Laserebene auf einen Gegenstand eine Linie, insbesondere eine Markierungslinie, entsteht. Ferner kann die Lasereinheit auch nicht-optische Elemente, beispielsweise Mittel zur Justierung und/oder elektronische Schaltungen zur Steuerung der Lichtquelle und/oder zur Steuerung anderer Komponenten der Lasereinheit, aufweisen. Insbesondere kann die Lasereinheit auch einen Motor zur Rotation der Lichtquelle und/oder eines strahlumlenkenden optischen Elements aufweisen, ebenfalls geeignet zur Erzeugung einer in einer Ebene aufgefächerten Lasermarkierung, wie insbesondere bei sogenannten Rotationslasern.

Die Ausgestaltung, insbesondere Form und Farbe, der mittels der Pendellaservorrichtung, insbesondere der Lasereinheit, erzeugten Lasermarkierung kann, unter anderem je nach Einsatzbereich und Aufgabe, unterschiedlich sein, insbesondere aber zumindest Markierungspunkte und/oder Markierungslinien, auch unterbrochene Markierungslinien, umfassen. Ferner kann die Lasereinheit dazu vorgesehen sein, die Lasermarkierung zeitlich veränderlich, insbesondere beispielsweise blinkend, auszuführen. Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Vorzugsweise kann die Pendellaservorrichtung auch mehrere, insbesondere zwei oder drei, Lasereinheiten aufweisen, die mittels zumindest einer, alternativ mittels je einer Laseraufnahme am Optikträger des Pendels aufgenommen sind, sodass bei Ausrichtung des Pendels am Lot zeitgleich mehrere Lasereinheiten und damit auch deren erzeugte Lasermarkierungen bezogen auf das Lot ausgerichtet werden und als Referenz dienen können. Die Pendellaservorrichtung kann in einer Ausführungsform zumindest zwei Lasereinheiten aufweisen, die zueinander orthogonale Laserebenen emittieren, deren Projektion auf Objekte jeweils zueinander orthogonale Markierungslinien erzeugt. Bevorzugt weist dabei eine vertikal ausgerichtete Laserebene entlang der durch das Lot vorgegebenen Richtung, d.h. die vertikal ausgerichtete Laserebene ist kollinear mit einem die Schwerkraft beschreibenden Vektor.

Die Pendellaservorrichtung weist des Weiteren eine Vorrichtung auf, die dazu vorgesehen ist, die Pendellaservorrichtung zur Inbetriebnahme und während des Betriebs mit elektrischer Energie zu versorgen. Insbesondere handelt es sich bei dieser Vorrichtung um einen stromnetzunabhängigen Energiespeicher, insbesondere um einen Akkumulator, eine Batterie, eine Brennstoffzelle, einen Kondensator, einen anderweitigen, dem Fachmann sinnvoll erscheinenden Energiespeicher oder eine Kombination/Mehrung derer. Insbesondere eigenen sich zur Energieversorgung der Pendellaservorrichtung wiederaufladbare Akkumulatoren, beispielsweise mit einer Nickel-Metallhydrid-, Lithium- oder Lithium-Ionen-Zellchemie. Vorzugsweise weist die Vorrichtung zur Energieversorgung eine lösbare Formschluss- und/oder Kraftschlussverbindungsschnittstelle auf. Unter "lösbar" soll in diesem Zusammenhang insbesondere zerstörungsfrei trennbar, insbesondere durch einen Nutzer der Pendellaservorrichtung zerstörungsfrei trennbar, verstanden werden. Somit ist die Vorrichtung zur Energieversorgung in einer Ausführungsform abnehmbar und austauschbar an dem Messgerät anordenbar. -Die abnehmbare Vorrichtung zur Energieversorgung lässt sich in und/oder außerhalb des Messgeräts wieder mit Energie aus einem Stromnetz versorgen und laden.

Dem Ein- und Ausschalten der Pendellaservorrichtung dient ein insbesondere am Gehäuse angeordneter Schalter oder ein alternatives Element, das diese Funktion erfüllt. Des Weiteren können weitere, einem Fachmann sinnvoll erscheinende Ausführungen vorgesehen sein, beispielsweise ein weiterer Schalter, der der Arretierung des Pendels in dem Gehäuse, insbesondere zu Transportzwecken oder zur Verkippung der Pendellaservorrichtung nach erfolgtem Auspendeln des Pendels, dient.

Bezüglich der Nomenklatur wird im Folgenden davon ausgegangen, dass die Pendellaservorrichtung typischerweise - allerdings nicht notwendigerweise - ein Gehäuse aufweist, wobei in dem Gehäuse zumindest eine Pendelanordnung vorgesehen ist. Die Pendelanordnung bezeichnet die gesamte funktionale Vorrichtung bestehend aus einer am Gehäuse oder einer an einem mit dem Gehäuse verbundenen Teil angeordneten Pendelaufhängung sowie einem an dieser Pendelaufhängung pendelbar angeordneten Pendel. Zur Erwirkung des freien Schwingens des Pendels weist die Pendelanordnung eine geeignete Lagerung oder ein Gelenk als Bestandteil des Pendels auf, die bzw. das ein freies, insbesondere reibungsarmes Schwingen des Pendels im Schwerefeld um zumindest zwei im Wesentlichen orthogonale Achsen ermöglicht. Beispielsweise kann eine derartige Lagerung oder ein derartiges Gelenk in Form einer kardanischen Lagerung realisiert sein. Neben der Lagerung oder dem Gelenk besteht das Pendel der Pendelanordnung ferner aus einem Optikträger zur Aufnahme zumindest einer Lasereinheit, wobei die Aufnahme bevorzugt mittels einer Laseraufnahme in dem Optikträger realisiert ist.

Alternativ und/oder zusätzlich kann der prinzipielle Aufbau der Pendelanordnung auch abweichend realisiert sein, beispielsweise indem das freie Schwingen des Pendels mittels einer geeigneten Lagerung oder eines Gelenks als Bestandteil der Pendelaufhängung realisiert ist. Die erfindungswesentlichen Grundsätze und technische Lehren der im Folgenden zur Veranschaulichung der Vorteile der Erfindung aufgezeigten Ausführungsbeispiele lassen sich selbstverständlich auf beliebige Ausgestaltungen der Pendelanordnung übertragen.

Zur Herstellung der Pendelanordnung der Pendellaservorrichtung wird in einem ersten Verfahrensschritt des erfindungsgemäßen Herstellungsverfahrens ein Kreuzgelenk des Pendels der Pendelanordnung mittels Kunststoff-Spritzgießtechnik unter Formung zweier orthogonaler, zumindest teilweise mikrostrukturierter Wellen gefertigt. In einem zweiten Verfahrensschritt werden zumindest zwei Lagerschalen auf die zumindest teilweise mikrostrukturierten Bereiche zumindest einer Welle des Kreuzgelenks platziert, bevorzugt auf die zumindest teilweise mikrostrukturierten Bereiche zumindest einer Welle des Kreuzgelenks gesteckt. Ein dritter Verfahrensschritt dient dazu, dass ein Optikträger des Pendels der Pendelanordnung durch Umspritzen zumindest zweier, eine Welle des Kreuzgelenks umgebenden Lagerschalen mittels Kunststoff-Spritzgießtechnik einstückig mit den Lagerschalen gefertigt und somit um die eine Welle drehbar an das Kreuzgelenk angebunden wird.

Das Kreuzgelenk des Pendels stellt eine vorteilhafte Ausführungsform einer kardanischen Lagerung dar, bei dem zwei zueinander orthogonal ausgerichtete, zumindest teilweise mikrostrukturierte Wellen ausgeformt sind, um die das Kreuzgelenk je eine rotative Drehbewegung ausführen kann. Die Wellen definieren dabei je eine Wellenachse, die jeweils den Mittelpunkt der Drehbewegung um die zugehörige Welle definiert. Die zwei zueinander orthogonal ausgerichteten Wellenachsen können beabstandet oder ohne Abstand zueinander vorgesehen sein.

Die Wellen sind zumindest teilweise an deren Oberfläche mikrostrukturiert. Unter "mikrostrukturiert" soll insbesondere verstanden werden, dass das Material der Wellen an deren Oberfläche und/oder in oberflächennahen Bereichen der Welle eine Mikrostruktur aufweist. Eine Mikrostruktur bezeichnet hier eine strukturelle, insbesondere plastisch dreidimensional ausgeformte, Beschaffenheit der Oberfläche und/oder der oberflächennahen Bereiche des Materials hinsichtlich einer räumlichen Anordnung, Verteilung, Orientierung, Form und/oder Größe des Materials. Insbesondere stellen Bereiche bis zu einer Tiefe von 1 mm, bevorzugt von 0.1 mm, besonders bevorzugt von 0.01 mm in das Material hinein oberflächennahe Bereiche dar, über die sich die Mikrostruktur erstreckt. In einer Ausführungsform kann die Mikrostruktur in Form einer Oberflächenkapillarstruktur realisiert sein.

Im Folgenden wird die "zumindest teilweise mikrostrukturierte Welle" zur Vereinfachung auch als "mikrostrukturierte Welle" bezeichnet. Wesentlich an dieser Stelle ist nur, dass die Mikrostruktur nicht notwendigerweise die gesamte Oberfläche der Welle bedecken muss, sondern auch auf einen Teilbereich der Oberfläche der Welle begrenzt sein kann.

Der Mikrostruktur liegt der Gedanke zugrunde, einen Kapillareffekt eines Schmiermittels, das auf die mikrostrukturierten Wellen aufgebracht wird, auszunutzen. Der Kapillareffekt ist dabei physikalisch bedingt und begründet sich in einer Oberflächenspannung und/oder einer Grenzflächenspannung, die der Kontakt einer Flüssigkeit mit Kapillaren wie beispielsweise engen Röhren, Spalten oder Hohlräumen hervorruft. Indem die Welle zumindest teilweise mit einer Mikrostruktur versehen ist, kann ein in der Mikrostruktur befindliches Schmiermittel aufgrund der wirkenden Kapillarkräfte in der Mikrostruktur gehalten werden und darüber hinaus in eine Vorzugsfließrichtung, vorzugsweise zur Reib- oder Lagerstelle hin, transportiert werden.

In der Oberfläche der Wellen kann eine Oberflächenkapillarstruktur in Form einer vollständig geschlossenen Kapillarröhrchenstruktur vorgesehen sein. Alternativ oder zusätzlich kann eine Oberflächenkapillarstruktur auch in Form einer offenen Kapillarstruktur, die eine im Wesentlichen gleiche Aufgabe übernimmt wie geschlossene Kapillarröhrchen, vorgesehen sein. Eine derartige Oberflächenkapillarstruktur kann in Form einer geeigneten Oberflächenrauigkeit und/oder in Form von Schmiermittelkanälen gebildet sein. In einer beispielhaften Ausführungsform ist die Oberflächenkapillarstruktur in Form von Mustern realisiert, beispielsweise in Form von Querrillen oder Kreuzen oder Ringen oder dergleichen.

Durch die Ausnutzung des Kapillareffekts kann die Wahrscheinlichkeit des Auftretens von unzureichender Schmierung der Reibstelle - d.h. der Lagerstelle des Kreuzgelenks - erheblich reduziert werden. Insbesondere kann einer Schmiermittelverarmung an der Lagerstelle der gegeneinander beweglichen Komponenten der Pendelanordnung der Pendellaservorrichtung entgegengewirkt werden.

In dem ersten Verfahrensschritt wird das Kreuzgelenk des Pendels der Pendelanordnung mittels Kunststoff-Spritzgießtechnik unter Formung zweier zueinander orthogonaler, zumindest teilweise mikrostrukturierter Wellen gefertigt. Zur Ausformung des Kreuzgelenks einschließlich der mikrostrukturierten Wellen dient ein erstes Spritzgießwerkzeug, insbesondere eine erste Spritzgießform. Nach Schließen des Spritzgießwerkzeugs wird im Spritzgießverfahren ein Kunststoffmaterial in die Form eingespritzt und anschließend ausgehärtet. Auf diese Weise entsteht das Kreuzgelenk-Spritzgussbauteil in einem wirtschaftlich besonders günstigen und vorteilhaften Verfahren. Dabei umfließt das eingespritzte Kunststoffmaterial die vorgegebene Negativ-Form im Spritzgießwerkzeug und führt zu einer Ausbildung der durch das Spritzgießwerkzeug definierten Form. Insbesondere wird dabei auch die Mikrostruktur der Wellen, insbesondere eine Oberflächenkapillarstruktur, in Folge des Umfließens einer geeigneten Negativ-Struktur des ersten Spritzgießwerkzeugs ausgeformt. Zumindest zwei orthogonale Wellen mit zumindest je einem mikrostrukturierten Bereich werden geformt und definieren fortan die zwei zueinander orthogonalen Wellenachsen des Kreuzgelenks.

Insbesondere ist das Spritzgießwerkzeug zur Durchführung des ersten Verfahrensschritts vorgesehen, insbesondere geformt, um eine Herstellung des Kreuzgelenks in erfindungsgemäßem Herstellungsverfahren zu gewährleisten.

Vorteilhaft wird im ersten Verfahrensschritt ein besonders präzise geformtes Kreuzgelenk gefertigt, unter Verringerung von Fertigungstoleranzen. Ferner wird ein besonders stabiles Kreuzgelenks realisiert, das insbesondere langzeitstabil, stabil gegenüber mechanischen Einflüssen und stabil gegenüber thermischen Schwankungen ist. Ebenfalls ist durch die einfache Herstellung des Kreuzgelenks in erfindungsgemäßem Herstellungsverfahren, das auf die Montierung einer Vielzahl von Einzelteilen verzichtet, eine kostengünstige und schnelle, daher besonders wirtschaftliche Herstellung des Kreuzgelenks realisierbar.

Das in dem ersten Verfahrensschritt gefertigte Kreuzgelenk des Pendels der Pendelanordnung wird anschließend dem ersten Spritzgießwerkzeug entnommen und in erfindungsgemäßem zweiten Verfahrensschritt weiterverwendet. Dabei werden zumindest zwei Lagerschalen auf die zumindest teilweise mikrostrukturierten Bereiche zumindest einer Welle des Kreuzgelenks platziert oder angeordnet, bevorzugt gesteckt.

Unter einer Lagerschale ist insbesondere ein ringförmiges Lager zu verstehen, auch Lagerring genannt, das der Realisierung eines Gleitlagers dient. Vorzugsweise wird in angeordnetem Zustand der Lagerschale auf einer Welle des Kreuzgelenks ein Reibungswiderstand zwischen der Welle und der Lagerschale, bevorzugt zwischen der Welle und dem Optikträger der Pendelanordnung, vorteilhaft reduziert. Unter Verwendung derartiger Lagerschalen in Verbindung mit einem Schmiermittel kann eine besonders leichtgängige, insbesondere nahezu reibungsfreie Drehbewegung des Kreuzgelenks um die jeweilige Wellenachse realisiert werden. In einer Ausführungsform werden die Lagerschalen an den Wellen derart verwendet, dass ein innerer Bereich der Lagerschale drehbar gegenüber einer Welle des Kreuzgelenks ist - bzw. die Welle drehbar gegenüber der Lagerschale -, während der äußere Bereich der Lagerschale fest mit einem anderen Bestandteil der Pendelaufhängung, der frei drehbar bezüglich der jeweiligen Wellenachse des Kreuzgelenks gelagert sein soll, verbunden ist. Einen solchen Bestandteil kann insbesondere der Optikträger des Pendels oder ein Bestandteil der Pendelaufhängung der Pendelanordnung darstellen. Auf diese Weise kann eine freie Rotation des Kreuzgelenks um eine entsprechende Wellenachse relativ zu einem daran befestigten Optikträger oder relativ zu einer daran befestigten Pendelaufhängung gewährleistet werden.

In dem dritten Verfahrensschritt des erfindungsgemäßen Herstellungsverfahren wird ein Optikträger des Pendels der Pendelanordnung durch Umspritzen zumindest zweier, eine Welle des Kreuzgelenks umgebenden Lagerschalen mittels Kunststoff-Spritzgießtechnik einstückig mit den Lagerschalen gefertigt und um die eine Welle drehbar an das Kreuzgelenk angebunden. Der Optikträger des Pendels der Pendelanordnung stellt denjenigen Teil des Pendels der Pendelanordnung dar, der der Aufnahme sowie der Ausrichtung zumindest einer Lasereinheit im Schwerefeld dient. In einer Ausführungsform des dritten Verfahrensschritts wird das im ersten Verfahrensschritt hergestellte und im zweiten Verfahrensschritt mit zumindest zwei Lagerschalen auf zumindest einer Welle versehene Kreuzgelenk in ein weiteres Spritzgießwerkzeug eingelegt. Nach Schließen des Spritzgießwerkzeugs wird ein weiterer Kunststoff-Spritzgießverfahrensschritt durchgeführt. Dabei ist die Form des Spritzgießwerkzeugs derart vorgeformt, dass infolge des Einspritzens von Kunststoff ein Optikträger gewünschter Form entsteht, der erfindungsgemäß einstückig, insbesondere form- und kraftschlüssig, mit dem Kreuzgelenk ausgebildet ist.

Das Spritzgießwerkzeug im dritten Verfahrensschritt ist derart gestaltet, dass nur die zumindest zwei Lagerschalen, die eine Welle des Kreuzgelenks umgeben, im Spritzgießverfahren benetzt werden können. So lassen sich nur diese zumindest zwei Lagerschalen als gegenüber der Welle des Kreuzgelenks beweglicher Teil des Kreuzgelenks an das im dritten Verfahrensschritt entstehende Spritzgussbauteil, insbesondere den Optikträger, angebunden werden. In einer Ausführungsform des Herstellungsverfahrens ist das Spritzgießwerkzeug derart geformt, dass die Lagerschalen beim Einlegen des Kreuzgelenks so in dem Spritzgießwerkzeug positioniert sind, dass die Außenseiten der Lagerschalen in dem freien Volumen des Spritzgießwerkzeugs zu liegen kommen. Auf diese Weise wird ein im Spritzgießverfahren eingespritztes Material um die Lagerschalen gespritzt, während der Innenbereich der jeweiligen Lagerschalen sowie die zumindest teilweise mikrostrukturierte Welle von dem eingespritzten Material unbenetzt bleiben. Nach Positionieren des Kreuzgelenks samt den auf dessen Wellen platzierten Lagerschalen in dem Spritzgießwerkzeug wird dieses geschlossen und ein Kunststoffmaterial in die Form eingespritzt. Das Kunststoffmaterial umspritzt oder umfließt die Lagerschalen im Spritzgießwerkzeug und führt in Folge des anschließenden Aushärtens des Kunststoffs zu einer festen Anbindung der Lagerschalen an den umspritzten Optikträger.

Bevorzugt sind damit die zumindest zwei Lagerschalen untrennbar, insbesondere einstückig, mit dem Kunststoff des Optikträgers verbunden, so dass eine Trennung beider Komponenten nicht ohne eine Zerstörung des Kreuzgelenkbauteils und/oder des Optikträgerbauteils einhergeht. Unter "einstückig" in diesem Sinne ist zu verstehen, dass in dem Kunststoff-Spritzgießverfahren der Kunststoff an zumindest eine Komponente der Lagerschale, insbesondere deren Außenfläche, angebunden wird, insbesondere form- und kraftschlüssig angebunden wird, sodass sie nicht als mehrere aneinander gefügte Bauteile erscheinen und jedenfalls nicht mehr voneinander gelöst werden können, ohne dabei zerstört zu werden. Insbesondere bedeutet "einstückig" im Sinne der Beschreibung, dass der Optikträger und das Kreuzgelenk nicht notwendigerweise aus einem einzigen und einheitlichen Teil und/oder Material gefertigt werden. Vielmehr werden Optikträger und das Kreuzgelenk im Spritzgießverfahren als fest und innig, insbesondere form- und kraftschlüssig, miteinander verbunden gefertigt.

Das Umspritzen einer Lagerschale mit Kunststoff meint insbesondere nicht notwendigerweise das vollständige Umhüllen der Lagerschale mit Kunststoff, sondern vielmehr die Anbindung einer Komponente der Lagerschale, insbesondere einer Innen- oder Außenfläche der Lagerschale, durch um-, an- bzw. einspritzen und anschließendes insbesondere passgenaues Aushärten des Kunststoffs. Beispielsweise kann ein Optikträger durch Umspritzen der Außenfläche einer Lagerschale in Folge des Aushärtens des Kunststoffs derart an die Lagerschale, insbesondere deren Außenfläche, angebunden werden, dass Optikträger, Lagerschale und somit auch Kreuzgelenk ein einstückiges, insbesondere form- und kraftschlüssiges, Bauteil bilden. Dabei bleibt bevorzugt die Innenfläche und/oder das von der Innenfläche der Lagerschale umgebene Volumen unbenetzt von Kunststoff. Derart kann sichergestellt werden, dass die Funktionalität der Lagerschale, insbesondere eine freie Drehbarkeit der Lagerschale gegenüber der Welle (und umgekehrt), die von der Lagerschale umgeben ist, nicht eingeschränkt wird. Durch Umspritzen des Kunststoffs um die Lagerschalen des Kreuzgelenks werden das Kreuzgelenk sowie die eine Welle des Kreuzgelenk umgebenden zumindest zwei Lagerschalen nicht-zerstörungsfrei trennbar als ein Gesamtbauteil, das Pendel der Pendelanordnung, mit dem eingespritzten Kunststoff verbunden. Das Spritzgießwerkzeug ist vorgesehen, insbesondere geformt, um eine Herstellung des Optikträgers in erfindungsgemäßem Herstellungsverfahren zu gewährleisten.

Bevorzugt ist ein weiteres Spritzgießwerkzeug zur Durchführung des dritten Herstellungsschritts vorgesehen, insbesondere derart geformt, eine Herstellung eines einstückigen Pendels samt Optikträger durch Umspritzen zumindest zweier, eine Welle des Kreuzgelenks umgebender Lagerschalen mittels Kunststoff-Spritzgießtechnik zu ermöglichen.

Durch Umspritzen einer an einer Welle des Kreuzgelenks angeordneten Lagerschale kann eine besonders definierte, präzise und reproduzierbare Ausrichtung des Optikträgers bezogen auf das Kreuzgelenk durchgeführt werden, bei Verringerung der Fertigungstoleranzen. Ferner wird eine besonders stabile, insbesondere einstückige, Verbindung zwischen Optikträger und Lagerschale des Kreuzgelenks realisiert, die insbesondere langzeitstabil, stabil gegenüber mechanischen Einflüssen und stabil gegenüber thermischen Schwankungen ist. Ebenfalls ist durch die einfache Herstellung des Optikträgers in erfindungsgemäßem Herstellungsverfahren, das auf die Montierung einer Vielzahl von Einzelteilen verzichtet, eine kostengünstige und schnelle, daher besonders wirtschaftliche Herstellung des Optikträgers realisierbar.

Vorteilhaft erlaubt die Erfindung ein Pendel einer Pendelanordnung einer Pendellaservorrichtung mit besonders wenigen Montageschritten und besonders wenigen Einzelkomponenten zu fertigen. Insbesondere lässt sich auf diese Weise mit lediglich drei Verfahrensschritten des Herstellungsverfahrens ein Pendel herstellen, bei dem die Anzahl verwendeter Bauteile oder Komponenten minimiert ist. Demnach sind keine aufwendige Herstellung von Einzelkomponenten sowie keine Montage einer Vielzahl von Einzelkomponenten durchzuführen, sodass das Herstellungsverfahren vorteilhaft beschleunigt und wirtschaftlich gestaltet wird.

Ferner kann durch die Fertigung eines Pendels nach erfindungsgemäßem Herstellungsverfahren auf aufwendige Bearbeitungs- und/oder Justierschritte, bei denen Einzelkomponenten im Herstellungsverfahren der Pendelanordnung zeit- und kostenintensiv möglichst präzise positioniert und in ihren Führungen aufwendig angepasst werden, verzichtet werden. Da im erfindungsgemäßen Herstellungsverfahren sowohl das Kreuzgelenk als auch der Optikträger mittels Kunststoff-Spritzgießtechnik aufeinander aufbauend und aufeinander angepasst hergestellt werden, muss keine Anpassung von Positionen sowie keine Anpassung von Gelenkwellen oder Führungen von Wellen und/oder Kugellagern in typischerweise aufwendigen Zerspanungsprozessen durchgeführt werden. Besonders vorteilhaft wird auf diese Weise eine Funktionsintegration von Komponenten direkt im Herstellungsverfahren durchgeführt, mit der Folge, dass Fehler, insbesondere auch Fertigungstoleranzen, minimiert werden und die Herstellung der Pendellaservorrichtung hinsichtlich Korrektur und/oder Ausgleich von Fertigungstoleranzen vereinfacht und beschleunigt wird. Insbesondere liegen die Fertigungstoleranzen in erfindungsgemäßem Herstellungsverfahren unter 1 mm, bevorzugt unter 1/10 mm, besonders bevorzugt unter 1/100 mm. Das erfindungsgemäße Herstellungsverfahren erlaubt daher eine besonders wirtschaftliche und schnelle, gleichzeitig aber auch besonders definierte, präzise und reproduzierbare Herstellung einer Pendelanordnung.

Ferner können unter Verwendung des erfindungsgemäßen Herstellungsverfahrens wirtschaftlich besonders vorteilhaft teure Wälzlager zur drehbaren Lagerung des Optikträgers gegenüber dem Kreuzgelenk vermieden werden.

In einer Ausführungsform des erfindungsgemäßen Herstellungsverfahrens werden/wird das Kreuzgelenk und/oder der Optikträger aus duroplastischem Kunststoff mittels Kunststoff-Spritzgießtechnik gefertigt.

Duroplastische Kunststoffe (Duromere) weisen nach ihrer Aushärtung eine extrem hohe und dauerhafte Form- und Temperaturbeständigkeit auf und eignen sich daher besonders zur Herstellung des erfindungsgemäßen Pendels mit dem Gewinn zuverlässiger und dauerhafter Erfüllung der engen Toleranzvorgaben. Darüber hinaus lässt sich eingespritzter duroplastischer Kunststoff insbesondere noch in dem Spritzgießwerkzeug, insbesondere bei Raumtemperatur mit Hilfe von Katalysatoren chemisch, oder bei erhöhten Temperaturen thermisch aktivieren und vernetzen und somit aushärten. In einer Ausführungsform des Herstellungsverfahrens kann beispielsweise als Duroplast ein Bulk-Molding-Compound (BMC), eine Phenolformmasse (PF) oder ein Epoxidharz (EP) verwendet werden. Derartige Materialien vernetzen chemisch unter erhöhter Temperatur, beispielsweise insbesondere bei 130 Grad Celsius bis 180 Grad Celsius, und lassen sich daher vorteilhaft in dem Spritzgießwerkzeug vernetzen und aushärten. In einer Ausführungsform sind diese Materialien mit Verstärkungsstoffen, beispielsweise Glasfasern, Kohlefasern oder dergleichen gefüllt, sodass eine hohe mechanische und thermische Beständigkeit des ausgehärteten Kunststoffs resultiert. Diese hohe mechanische und thermische Beständigkeit verleiht dem gefertigten Pendel, insbesondere dem Kreuzgelenk und dem Optik-träger, vorteilhafte physikalisch/technische Eigenschaften, insbesondere hinsichtlich Temperaturstabilität und Stabilität gegenüber mechanischen Einflüssen wie Stößen, Schlägen, Vibrationen oder dergleichen.

Duroplastischer Kunststoff stellt ferner einen unpolaren Polymerwerkstoff dar, der in Verbindung mit einem polaren Schmiermittel zu einem stark ausgeprägten Kapillareffekt des Schmiermittels, das auf die zumindest teilweise mikrostrukturierten Wellen aufgebracht wird, führt.

In einer Ausführungsform des Herstellungsverfahrens wird ein Duroplast verwendet, der sich während des Aushärtens im Spritzgießwerkzeug geringfügig ausdehnt und/oder mit einer positiven Schwindung eingestellt werden kann. Auf diese Weise können besonders enge Toleranzen des Spritzgießwerkzeugs optimal abgeformt werden. Durch eine derartige hochpräzise Abformung des Spritzgießwerkzeugs kann ebenfalls das zu fertigende Bauelement, insbesondere das Kreuzgelenk und/oder der Optikträger, sehr präzise und in besonders engen Toleranzbereichen gefertigt werden. Ferner kann eine leichte Formschräge des zu gießenden Bauteils, insbesondere des Kreuzgelenks und/oder des Optikträgers, eine leichtere Entformung nach Aushärten des Bauteils bewirken.

In einer Ausführungsform wird ein Duroplast mit einer kurzen Vernetzungszeit verwendet. Unter Verwendung eines Duroplasten mit einer kurzen Vernetzungszeit kann die Dauer, die das Spritzgussbauteil im Spritzgießwerkzeug zum Aushärten verweilt, vorteilhaft reduziert werden und eine effizientere Herstellung der Pendelanordnung erreicht werden.

In einer Ausführungsform des erfindungsgemäßen Herstellungsverfahrens werden die Lagerschalen in zumindest einem weiteren Verfahrensschritt aus einem Thermoplast-Halbzeug, insbesondere aus einem extrudierten Teflon- oder Polyoxymethylen- oder Polyketon-Halbzeug, gefertigt.

Thermoplaste stellen hinsichtlich mechanischer Stabilität bevorzugte Kunststoffe dar, die zur Erreichung und Einhaltung sehr enger Toleranzanforderungen des Bauteils vorteilhaft sind. Darüber hinaus zeichnet sich thermoplastischer Kunststoff durch die Fähigkeit zur Absorption mechanischer Einflüsse, insbesondere beispielsweise von Stößen und Vibrationen oder dergleichen, aus. Besonders vorteilhaft kann sich thermoplastischer Kunststoff unter Einfluss hoher Temperatur geringfügig zumindest teilweise reversibel ausdehnen und bei Abkühlung wieder zusammenziehen (Schrumpfung oder thermische Kontraktion).

Die Lagerschalen können wirtschaftlich besonders vorteilhaft aus extrudiertem Thermoplast-Halbzeug, besonders bevorzugt aus extrudiertem Teflon- oder Polyoxymethylen- oder Polyketon-Halbzeug, gefertigt bzw. geschnitten werden. Bei der Extrusion werden mittels Pressen von festen bis dickflüssigen Massen kontinuierlich aus einer formgebenden Öffnung Körper beliebiger Länge herausgepresst. Diese Körper beliebiger Länge mit gewünschtem Querschnitt - hier bevorzugt in Form eines Rohrs oder einer Röhre - lassen sich anschließend auf einfache Weise in Lagerschalen zerschneiden oder anderweitig aufteilen.

In einer Ausführungsform des Herstellungsverfahrens werden die Lagerschalen vor Umspritzen mittels Kunststoff-Spritzgießtechnik erwärmt, wobei sich in Folge einer thermischen Expansion der Innendurchmesser der Lagerschalen verkleinert.

In einer Ausführungsform verkleinert sich in Folge der thermischen Expansion der Lagerschalen deren Innendurchmesser zumindest teilweise reversibel, sodass sich die Innenfläche der Lagerschalen eng um die Welle und insbesondere eng um den zumindest teilweise mikrostrukturierten Bereich der von der Lagerschale umgebenen Welle legt. Insbesondere kann die Lagerschale in Folge der thermischen Expansion derart eng an der Welle anliegen, dass eine Drehbarkeit der Lagerschale um die Welle nicht möglich ist. Dabei bedeckt die Lagerschale den mikrostrukturierten Bereich der Welle und/oder schließt diesen bevorzugt dicht ab. Auf diese Weise kann der mikrostrukturierte Bereich der Welle vorteilhaft vor eingespritztem Kunststoff-Material geschützt werden. Die Mikrostruktur wird somit nicht von im dritten Verfahrensschritt eingespritztem Kunststoff-Material benetzt, sodass die Mikrostruktur uneingeschränkt erhalten bleibt.

In einer Ausführungsform des Herstellungsverfahrens werden die Lagerschalen nach Umspritzen mittels Kunststoff-Spritzgießtechnik abgekühlt, wobei in Folge der thermischen Kontraktion/Schrumpfung ein dünner Spalt zu den zumindest teilweise mikrostrukturierten Wellen entsteht.

In Folge des Abkühlens nach dem dritten Verfahrensschritt kontrahiert sich das Material wieder, wobei sich der Innendurchmesser der Lagerschalen entsprechend zumindest teilweise reversibel wieder vergrößert. In einer Ausführungsform nimmt die Lagerschale nach Kontraktion wieder ihre ursprüngliche Form, d.h. ihre Form vor Erhitzen, ein. Insbesondere weist die Lagerschale zumindest nach Abkühlen nach dem dritten Verfahrensschritt einen dünnen Spalt zu der zumindest teilweise mikrostrukturierten Welle auf. Der Spalt kann in einer Ausführungsform bereits vor Erhitzen, d.h. bei Raumtemperatur, vorhanden sein und insbesondere exakt auf die Maße der Welle abgestimmt sein. In einer alternativen Ausführungsform kann der Spalt auch erst in Folge der thermischen Ausdehnung entstehen. Der Spaltabstand zwischen Lagerschale und mikrostrukturierter Welle ist dabei insbesondere kleiner als 1 mm, bevorzugt kleiner als 0.5 mm, besonders bevorzugt kleiner als 0.1 mm. In Folge der Vergrößerung des Innendurchmessers der Lagerschalen wird durch die Bildung des Spalts zwischen Lagerschalen und mikrostrukturierter Welle vorteilhaft die darunter liegende Mikrostruktur der von der Lagerschale umgebenen Welle wieder frei, insbesondere nicht mehr von der Lagerschale bedeckt und/oder dicht abgeschlossen. Besonders bevorzugt ist die Lagerschale nach Abkühlen wieder frei drehbar an der Welle angeordnet.

In einer Ausführungsform des Herstellungsverfahrens wird in einem weiteren Verfahrensschritt ein Schmiermittel in den Spalt zwischen Lagerschale und mikrostrukturierter Welle eingebracht.

Das in dem weiteren Verfahrensschritt in den Spalt zwischen Lagerschale und mikrostrukturierter Welle eingebrachte Schmiermittel dient der Erzeugung einer selbstschmierenden Wirkung zwischen Lagerschale und Welle. In Folge der auf den Wellen vorhandenen Mikrostruktur, insbesondere deren Oberflächenkapillarstruktur, wird das Schmiermittel in dem Bereich zwischen Lagerschale und Welle gehalten. Bevorzugt wird durch den Kapillareffekt des Schmiermittels in der Mikrostruktur einer Verarmung des Schmiermittels an der Lagerstelle zwischen Lagerschale und Welle entgegengewirkt. Hierzu weist die Mikrostruktur insbesondere eine kapillare Mikrostruktur auf, die derart beschaffen ist, dass das in ihr befindliche Schmiermittel aufgrund der wirkenden Kapillarkräfte in eine Vorzugsfließrichtung, vorzugsweise zur Lagerstelle hin, transportiert wird. Somit kann eine unzureichende Schmierung der Lagerstelle bzw. Lagerstelle zwischen Lagerschale und Welle vermieden werden.

In einer Ausführungsform kann die Oberflächenkapillarstruktur zur Vorgabe einer Vorzugsfließrichtung des Schmiermittels in Richtung der Lagerstelle derart ausgeformt sein, dass sich die Abmessungen der Oberflächenkapillarstruktur in Richtung der Lagerstelle reduzieren, d.h. die Kapillaren sich in Richtung der Lagerstelle verjüngen. Da sich das Schmiermittel auf Grund der Kapillarkräfte stets in Richtung des engeren Kapillarabschnittes bewegt, bewegt sich das Schmiermittel mithin in Richtung der Lagerstelle. Die resultierenden Kapillarkräfte sind umso größer, je geringer die kapillarkraftwirksamen Abmessungen - beispielsweise bei Röhrchen deren innerer Radius - sind.

In einer beispielhaften Ausführungsform besteht eine Möglichkeit zur Ausbildung der Oberflächenkapillarstruktur darin, diese, zumindest abschnittsweise, vorzugsweise vollständig, von Fließkanälen für das Schmiermittel zu bilden. In einer Ausführungsform handelt es sich dabei um, insbesondere linear, auf den Lagerbereich (Reibbereich) zulaufende Fließkanäle, ganz besonders bevorzugt um parallel verlaufende Fließkanäle. Um eine Vorzugsfließrichtung für das Schmiermittel vorzugeben, verringert sich die Kanalbreite und/oder die Kanaltiefe der Fließkanäle in der Vorzugsfließrichtung, also bevorzugt hin zur Lagerstelle zwischen Lagerschale und Welle. In einer Ausführungsform sind die Fließkanäle anfangs relativ breit und tief, beispielsweise zwischen ca. 10 µm und ca. 100 µm breit und/oder tief, und werden in Richtung der Vorzugsfließrichtung zunehmend schmaler und/oder weniger tief. In einer Ausführungsform münden die Fließkanäle in den Reibbereich in der Lagerstelle mit einer Breite und/oder Tiefe zwischen etwa 1 µm und etwa 40 µm.

In einer alternativen oder zusätzlichen Ausführungsform kann die Mikrostruktur, d.h. insbesondere die Oberflächenkapillarstruktur, als Oberflächenrauigkeit realisiert sein, wobei die Oberflächenrauigkeit mit einem Gradienten versehen ist und in Vorzugsfließrichtung in Richtung der Lagerstelle abnimmt.

In einer Ausführungsform des erfindungsgemäßen Herstellungsverfahrens wird, insbesondere unter Verwendung eines Mittels zum Erzeugen einer Hinterschneidung, im Kunststoff-Spritzgießverfahren zumindest eine Aufnahme in dem Optikträger zur Aufnahme einer Lasereinheit ausgeformt.

In einer Ausführungsform wird eine Aufnahme einer Lasereinheit in dem Optikträger während des Kunststoff-Spritzgießverfahrens beispielsweise in Form einer den Optikträger in seiner Tiefe axial durchsetzenden Aufnahme ausgeformt. Dies lässt sich besonders einfach unter Verwendung mindestens eines Mittels zur Erzeugung einer Hinterschneidung realisieren, beispielsweise unter Verwendung mindestens eines Schiebers, der vor Durchführung des Spritzgießverfahrens in das Spritzgießwerkzeug eingeschoben wird, sodass sich auf diese Weise mindestens eine Hinterschneidung anfertigen lässt. Beispielsweise geschieht dies unter Verwendung eines Kernzug-Schiebers. Nach Aushärten des eingespritzten Materials wird anschließend das Mittel zur Erzeugung einer Hinterschneidung, insbesondere der Schieber, aus dem Spritzgießwerkzeug, zumindest aber aus dem gefertigten Spritzgussbauteil, entfernt, sodass ein Entformen des ausgehärteten Spritzgussbauteils möglich ist.

Eine Aufnahme einer Lasereinheit kann auf diese Weise bereits während des Herstellungsverfahrens des Pendels einstückig mit dem Optikträger des Pendels der Pendelanordnung ausgeformt werden. Insbesondere kann eine besonders definierte, präzise und reproduzierbare Fertigung der Aufnahme einer Lasereinheit realisiert werden, bei Verringerung der Fertigungstoleranzen. Ferner sind im Folgenden keine weiteren Fertigungsschritte wie beispielsweise Zerspanen oder dergleichen sowie keine weiteren Bauteile zur Fertigung der Aufnahme nötig. Somit wird eine effiziente, besonders schnelle und wirtschaftlich günstige Herstellung der Aufnahme einer Lasereinheit zeitgleich mit der Fertigung des Optikträgers realisiert.

In einer Ausführungsform des erfindungsgemäßen Herstellungsverfahrens wird mindestens eine Masse zum Austarieren des Pendelns beim Spritzgießen an den Optikträger angebunden oder in den Optikträger eingebettet.

In einer Ausführungsform wird die Masse zum Austarieren des Pendels während des dritten Verfahrensschritts des Herstellungsverfahrens, bei dem der Optikträger des Pendels der Pendelanordnung mittels Kunststoff-Spritzgießtechnik einstückig mit dem Kreuzgelenk gefertigt wird, unmittelbar im selben Verfahrensschritt mittels Umspritzen der Masse an den Optikträger angebunden oder in diesen eingebettet. Dazu wird in einer Ausführungsform des Herstellungsverfahrens die Masse noch vor Verschließen des Spritzgießwerkzeugs in dieses an geeigneter Stelle und in geeigneter Ausrichtung eingelegt. Unter "anbinden/einbetten mittels Umspritzen" soll insbesondere verstanden werden, dass die Masse zum Austarieren im Spritzgießverfahren fest und innig, insbesondere form- und kraftschlüssig, mit dem Optikträger gefertigt und verbunden wird, sodass Optikträger und Masse nicht als mehrere aneinander gefügte Bauteile erscheinen und jedenfalls nicht mehr voneinander gelöst werden können, ohne dabei zerstört zu werden. "Umspritzen" meint insbesondere nicht notwendigerweise das vollständige Umhüllen der Masse mit Kunststoff, sondern vielmehr die stabile Anbindung der Masse durch um-, an- bzw. einspritzen und anschließendes, insbesondere passgenaues, Aushärten des Kunststoffs, wobei die Masse zum Austarieren positionsstabil an den Optikträger angebunden wird. Besonders vorteilhaft lässt sich auf diese Weise ein Austarieren des Pendels sehr präzise, definiert und reproduzierbar bereits im Herstellungsverfahren des Optikträgers durchführen, sodass ein nachträgliches, zeitaufwendiges Austarieren mit an dem Optikträger nachträglich anzubringenden oder zu justierenden Massen umgangen wird.

Alternativ und/oder zusätzlich lässt sich unter Anwendung der gleichen technischen Lehre auch ein Metall zur Realisierung einer Wirbelstromdämpfung nach dem Prinzip des Waltenhof'schen Pendels unmittelbar im selben Verfahrensschritt mittels Umspritzen des Metalls an den Optikträger anbinden oder in diesen einbetten.

In einer Ausführungsform des erfindungsgemäßen Herstellungsverfahrens wird der Optikträger zumindest teilweise in einem Mehrkomponenten- Spritzgießverfahren, insbesondere in einem mehrstufigen Spritzgießverfahren, unter Verwendung von Metall gefertigt und insbesondere hinsichtlich einer Masseverteilung austariert.

Vorteilhaft lässt sich auf diese Weise in erfindungsgemäßem Herstellungsverfahren eine erste Komponente in das Spritzgießwerkzeug einspritzen, während ein Mittel zur Erzeugung einer Hinterschneidung, insbesondere ein seitlicher Schieber oder Kernzug, in das Spritzgießwerkzeug eingeführt ist, sodass nicht der gesamte zur Verfügung stehende Raum des Spritzgießwerkzeugs mit der ersten Komponente ausgefüllt wird. Nach Aushärten dieser ersten Komponente, insbesondere der Kunststoff-Komponente, wird das Mittel zur Erzeugung einer Hinterschneidung aus dem Spritzgießwerkzeug entfernt, insbesondere der seitliche Schieber gezogen, sodass eine Kavität freigegeben wird. Diese Kavität kann benutzt werden, um in einem unmittelbar anschließenden weiteren Spritzgießverfahrensschritt eine zweite Komponente in das Spritzgießwerkzeug, insbesondere die freigegebene Kavität, einzuspritzen und somit an die erste Komponente des bereits gefertigten Spritzgussbauteils anzubinden. In einer Ausführungsform kann es sich bei der zweiten Komponente um eine metallhaltige Spritzgießmasse handeln, in einer bevorzugten Ausführungsform beispielsweise um eine Metall-Pulver beinhaltende Kunststoff-Masse, die zur Platzierung eines zusätzlichen Gewichts an definierter Stelle des Optikträgers verwendet wird. Derart kann beispielsweise ein besonders fein definiertes und reproduzierbares Austarieren des Optikträgers bereits im Herstellungsverfahren des Optikträgers realisiert werden, ohne dass ein nachträgliches, zeitaufwendiges Austarieren mit an dem Optikträger nachträglich anzubringenden oder zu justierenden Massen hinfällig wird.

Alternativ und/oder zusätzlich lässt sich unter Anwendung der gleichen technischen Lehre auch ein Metall zur Realisierung einer Wirbelstromdämpfung nach dem Prinzip des Waltenhof'schen Pendels unmittelbar im selben Verfahrensschritt mittels Einspritzen einer metallhaltigen Materialkomponente an den Optikträger anbinden.

In einer Ausführungsform des erfindungsgemäßen Herstellungsverfahren wird in einem weiteren Verfahrensschritt eine Pendelaufhängung mittels Kunststoff-Spritzgießtechnik gefertigt, insbesondere als zweiteiliges, zusammensteckbares Bauteil gefertigt.

In einer Ausführungsform wird die Pendelaufhängung derart ausgeformt, dass eine Anordnung des Kreuzgelenks unter Verwendung mindestens einer Lagerschale des Kreuzgelenks an der Pendelaufhängung derart realisiert werden kann, dass eine rotative Drehbewegung des Kreuzgelenks um die durch diese Lagerschale vorgegebene Wellenachse in zumindest einem Winkelbereich möglich ist. Insbesondere wird dies durch Verwendung eines insbesondere zweiteiligen, stabil zusammensteckbaren Pendelaufhängung-Bauteils ermöglicht. Dazu weist das zusammensteckbaren Pendelaufhängung-Bauteil bevorzugt einen Hohlraum auf, der geeignet ist, zur Anordnung des Kreuzgelenks zumindest eine Lagerschale zumindest teilweise derart zu umfassen, dass eine stabile Anordnung des Kreuzgelenks an die Pendelaufhängung gewährleistet ist, wobei gleichzeitig eine freie Beweglichkeit des Kreuzgelenks um die durch diese Lagerschale definierte Wellenachse zumindest in einem Winkelbereich uneingeschränkt möglich ist. Insbesondere beträgt dieser Winkelbereich mehr als 15 Grad, bevorzugt mehr als 30 Grad, besonders bevorzugt mehr als 45 Grad.

Durch Verwendung einer zusammensteckbaren, insbesondere zweiteiligen, Pendelaufhängung, die in einem Hohlraum zwischen beiden zusammensteckbaren Teilen zumindest eine Lagerschale des Kreuzgelenks zumindest teilweise umfasst und stabil befestigt, kann in erfindungsgemäßem Herstellungsverfahren der Pendelaufhängung eine besonders präzise Befestigung und Führung des Kreuzgelenkes unter Einhaltung enger Toleranzen vorgesehen werden. Ferner kann die Pendelaufhängung mittels Kunststoff-Spritzgießtechnik besonders einfach, reproduzierbar und insbesondere auch wirtschaftlich vorteilhaft und kostengünstig gefertigt werden. Zur Herstellung der Pendelaufhängung mittels Kunststoff-Spritzgießtechnik ist ein weiteres, insbesondere drittes, Spritzgießwerkzeug derart vorgeformt, dass infolge des Einspritzens von Kunststoff eine insbesondere zweistückige, zusammensteckbare Pendelaufhängung gewünschter Form entsteht.

In einer Ausführungsform weisen die zusammensteckbaren Bestandteile der Pendelaufhängung ferner Mittel auf zur Realisierung einer Halte- und/oder Rastverbindung in zusammengestecktem Zustand, beispielsweise Haken und Öse, Clips oder dergleichen.

In einer Ausführungsform des erfindungsgemäßen Herstellungsverfahrens wird die Pendelaufhängung aus thermoplastischem Kunststoff, insbesondere glasfaserverstärktem thermoplastischen Kunststoff, mittels Kunststoff-Spritzgießtechnik gefertigt.

Thermoplaste stellen dabei einen Kompromiss aus mechanischer Verformbarkeit - benötigt zum stabilen Zusammenstecken der Pendelaufhängung, insbesondere beispielsweise zur Realisierung von Hak- und/oder Clip-Verbindungen - sowie thermischer und mechanischer Stabilität dar, die zur Erreichung und Einhaltung sehr enger Toleranzanforderungen des Bauteils vorteilhaft sind. Darüber hinaus zeichnet sich thermoplastischer Kunststoff durch die Fähigkeit zur Absorption mechanischer Einflüsse, insbesondere beispielsweise von Stößen und Vibrationen oder dergleichen, aus. Ferner härtet auch thermoplastischer Kunststoff unter Einfluss erhöhter Temperaturen aus. In einer Ausführungsform kann der thermoplastische Kunststoff beispielsweise als Polyamid (PA) oder Polybutylenterephthalat (PBT) mit 40 % Glasfaseranteil als Verstärkungsstoff gewählt sein.

In einer Ausführungsform des erfindungsgemäßen Herstellungsverfahrens wird in einem weiteren Verfahrensschritt das Pendel pendelbar an der Pendelaufhängung angeordnet.

In einer Ausführungsform wird das Pendel unter Verwendung zumindest einer Lagerschale pendelbar an der Pendelaufhängung angeordnet. Bevorzugt umschließt dazu die Pendelaufhängung zumindest eine Lagerschale des Kreuzgelenks und fixiert diese bezüglich deren Außenfläche, wobei die rotative Beweglichkeit des Kreuzgelenks bezogen auf die Innenfläche der Lagerschale, das durch die Pendelaufhängung fixiert wird, zumindest in einem Winkelbereich nicht behindert wird. Insbesondere beträgt dieser Winkelbereich mehr als 15 Grad, bevorzugt mehr als 30 Grad, besonders bevorzugt mehr als 45 Grad. Durch Verwendung der im Spritzgießverfahren gefertigten Pendelaufhängung kann in erfindungsgemäßem Herstellungsverfahren das Pendel mit hoher Präzision, besonders definiert und zügig an der Pendelaufhängung unter Einhaltung enger Toleranzen angeordnet werden. Die Verwendung weiterer Hilfsmittel zur präzisen Anpassung und Befestigung, insbesondere auch ein Nacharbeiten und Austarieren des Pendels an der Pendelaufhängung, sind überflüssig, sodass eine Beschleunigung des Herstellungsverfahrens erreicht wird.

Unter Verwendung von Mitteln zur Realisierung einer Halte- und/oder Rastverbindung in zusammengestecktem Zustand der Pendelaufhängung kann entweder eine lösbare oder alternativ eine unlösbare Steckverbindung ausgeführt sein.

In einer Ausführungsform des erfindungsgemäßen Herstellungsverfahrens wird in einem weiteren Verfahrensschritt die Pendelanordnung bestehend aus Pendel und Pendelaufhängung in einer Pendellaservorrichtung montiert.

Vorteilhaft kann auf diese Weise eine wirtschaftlich besonders günstige Montierung der Pendelanordnung in einer Pendellaservorrichtung erfolgen, da die Pendelanordnung bereits in den vorherigen Verfahrensschritten des Herstellungsverfahrens montierbereit vorgefertigt ist. Besonders vorteilhaft kann daher auf eine aufwendige Montierung unter Verwendung einer Vielzahl von Einzelschritten und/oder einer Vielzahl von Einzelbauteilen sowie Werkzeugen verzichtet werden. Ebenfalls ist eine präzise Ausrichtung der Pendelanordnung, insbesondere des Optikträgers des Pendels sowie der in dem Optikträger vorhandenen Aufnahme zur Aufnahme einer Lasereinheit, bereits in den vorherigen Verfahrensschritten durchgeführt worden, sodass ein langwieriges Austarieren der Pendelanordnung nach deren Montierung in einer Pendellaservorrichtung vermieden wird. Folglich stellt sich die Montierung der Pendelaufhängung in eine Pendellaservorrichtung besonders definiert, präzise und reproduzierbar, somit also auch besonders einfach und wirtschaftlich vorteilhaft, dar.

Ferner wird eine erfindungsgemäße selbstnivellierende Pendellaservorrichtung vorgeschlagen, die zumindest ein Gehäuse, ein in dem Gehäuse mittels Pendelaufhängung pendelbar angeordnetes Pendel sowie zumindest eine an einem Optikträger des Pendels angebrachte Lasereinheit zur Erzeugung zumindest einer optischen Markierung aufweist, insbesondere hergestellt nach erfindungsgemäßem Verfahren, wobei ein Kreuzgelenk des Pendels und der Optikträger des Pendels mittels Kunststoff-Spritzgießtechnik einstückig realisiert sind und der Optikträger um zumindest eine Welle des Kreuzgelenks drehbar, insbesondere pendelbar, an das Kreuzgelenk angebunden ist, wobei die drehbare Anbindung unter Verwendung einer Oberflächenkapillarstruktur der zumindest einen Welle und/oder des Optikträgers selbstschmierend ist.

In einer Ausführungsform der selbstnivellierenden Pendellaservorrichtung weist das Kreuzgelenk des Pendels der Pendelanordnung zwei orthogonale, zumindest teilweise mikrostrukturierte Wellen auf, wobei zumindest zwei Lagerschalen auf die zumindest teilweise mikrostrukturierten Bereiche zumindest einer Welle des Kreuzgelenks platziert sind und der Optikträger des Pendels der Pendelanordnung einstückig mit zumindest zwei, eine Welle des Kreuzgelenks umgebenden Lagerschalen realisiert und um die eine Welle drehbar an das Kreuzgelenk angebunden ist.

In einer Ausführungsform der selbstnivellierenden Pendellaservorrichtung weisen die Lagerschalen auf deren Außenseite zumindest eine Nut auf, die ein Verdrehen der Lagerschale verhindern, insbesondere ein Verdrehen der Lagerschale gegenüber dem Optikträger verhindern. Somit kann erreicht werden, dass die Welle immer genau geführt wird und die Außenflächen der Welle sowie die Innenfläche einer Lagerschale zur optimalen Schmierung exakt aufeinander bleiben.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: perspektivische Darstellung einer Ausgestaltung der erfindungsgemäßen Pendellaservorrichtung
- Figur 2: perspektivische Darstellung einer Ausgestaltung der erfindungsgemäßen Pendellaservorrichtung im Schnitt
- Figur 3a: perspektivische Darstellung einer Ausgestaltung eines erfindungsgemäßen Kreuzgelenks ohne angeordnete Lagerschalen
- Figur 3b: perspektivische Darstellung einer Ausgestaltung eines erfindungsgemäßen Kreuzgelenks mit platzierten Lagerschalen
- Figur 4: schematische Schnittdarstellung einer Ausgestaltung eines erfindungsgemäßen Kreuzgelenks mit Lagerschalen sowie vergrößerte Darstellung zweier Oberflächenkapillarstrukturen (a,b)
- Figur 5: perspektivische Darstellung einer Ausgestaltung eines erfindungsgemäßen Pendels
- Figur 6: schematische Ansicht eines Schnitts einer Ausgestaltung einer Pendelaufhängung, an der ein Pendel angeordnet ist
- Figur 7: Verfahrensdiagramm einer Ausgestaltung des erfindungsgemäßen Herstellungsverfahrens
- Figur 8: schematische Schnitt-Ansicht einer Ausgestaltung eines ersten Spritzgießwerkzeugs, in dem sich ein ausgehärtetes Kreuzgelenk befindet
- Figur 9: schematische Schnitt-Ansicht einer Ausgestaltung eines weiteren Spritzgießwerkzeugs, in dem sich ein Kreuzgelenk mit Lagerschalen und ein mit dem Kreuzgelenk einstückig ausgebildeter Optikträger befinden

### Beschreibung der Ausführungsbeispiele

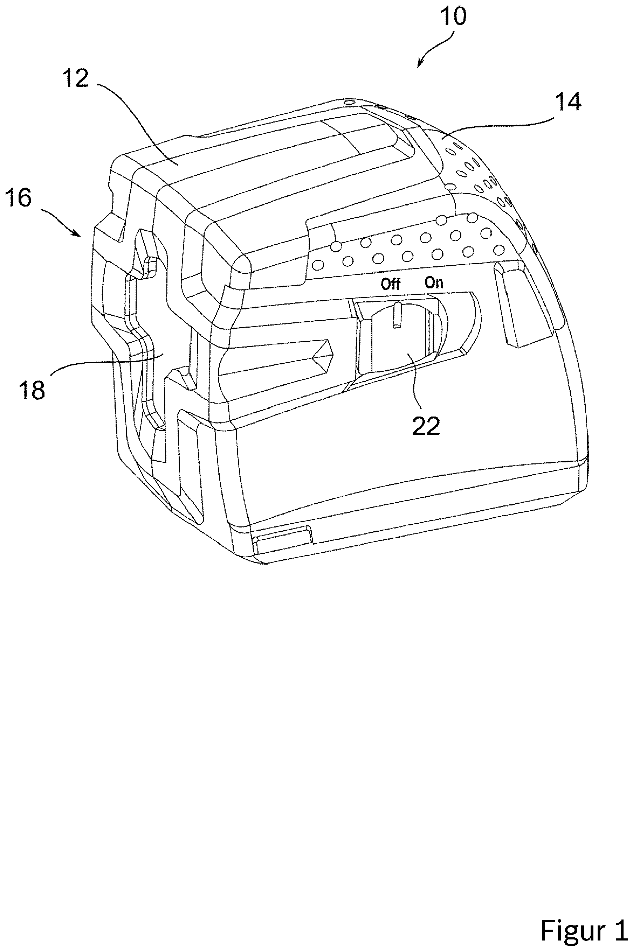

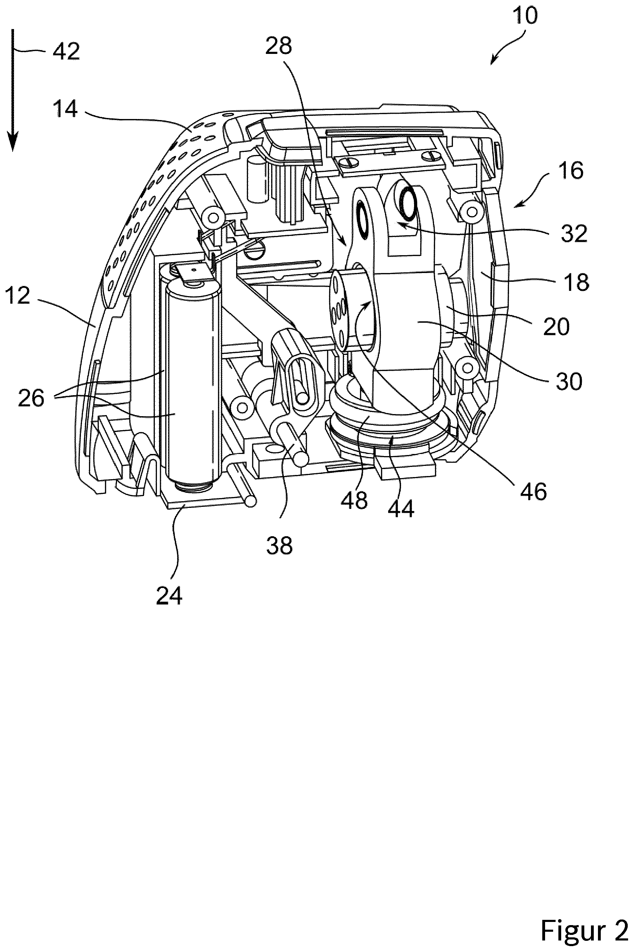

Die Darstellung der Figur 1 zeigt eine Ausführungsform einer erfindungsgemäßen Pendellaservorrichtung 10 in einer perspektivischen Seitenansicht. Die Pendellaservorrichtung 10 weist ein im Wesentlichen würfelförmiges Gehäuse 12 mit Kantenlängen in einem Bereich von 4 bis 15 cm, vorteilhafter Weise in einem Bereich von 5 bis 10 cm und besonders vorteilhaft im Bereich von 5 bis 7 cm auf. Das Gehäuse 12 besteht vorzugsweise im Wesentlichen aus einem polymeren Werkstoff oder einem beispielsweise faserverstärkten Verbundwerkstoff (z.B. faserverstärkter Duroplast oder Thermoplast). Das Gehäuse 12 umgibt die mechanischen Komponenten, optischen sowie elektronischen Bestandteile (vergleiche insbesondere Figur 2) der Pendellaservorrichtung 10 und schützt diese vor mechanischer Beschädigung und vermindert die Gefahr von Verunreinigungen. Zur Reduzierung der schädlichen Einwirkungen von Stößen gegen die Pendellaservorrichtung 10, sowie zur komfortableren Handhabung durch den Nutzer, ist das Gehäuse 12 teilweise mit einer Soft-Grip-Komponente 14 belegt. Auf der Frontseite 16 der Pendellaservorrichtung 10 ist eine Öffnung in dem Gehäuse 12, insbesondere eine Austrittsöffnung 18, vorgesehen. Durch die Austrittsöffnung 18 kann ein optisches Signal, insbesondere eine von einer im Gehäuse 12 angeordneten Lasereinheit 20 (vgl. insbesondere Figur 2) ausgesendete Laserstrahlung zur Erzeugung zumindest einer Lasermarkierung auf einem Objekt, aus dem Gehäuse 12 austreten.

Die Austrittsöffnung 18 ist mit einem für das optische Spektrum des optischen Signals transparenten, zumindest jedoch transluzenten Fensterelement (nicht näher dargestellten) versehen, sodass das Innere der Pendellaservorrichtung 10 vor Beschädigungen und Umwelteinflüssen, beispielsweise vor dem Eindringen von Feuchtigkeit und Staub, geschützt wird.

Seitlich am Gehäuse 12 der Pendellaservorrichtung 10 befindet sich ein Schalter 22, dessen Betätigung die im Gehäuse 12 angeordnete Elektronik, insbesondere die Energieversorgung der Lasereinheit 20, aktiviert/deaktiviert.

In Figur 1 nicht näher darstellt ist ein auf der Unterseite des Gehäuses 12 der Pendellaservorrichtung 10 untergebrachtes Batteriefach. Das Batteriefach bildet mit seinem Batteriefachdeckel 24 einen wesentlichen Bestandteil der Oberfläche des Gehäuses 12. Das Batteriefach dient der Aufnahme von Batterien 26 oder auch Akkumulatoren zur Energieversorgung der Pendellaservorrichtung 10 (vgl. insbesondere Figur 2).

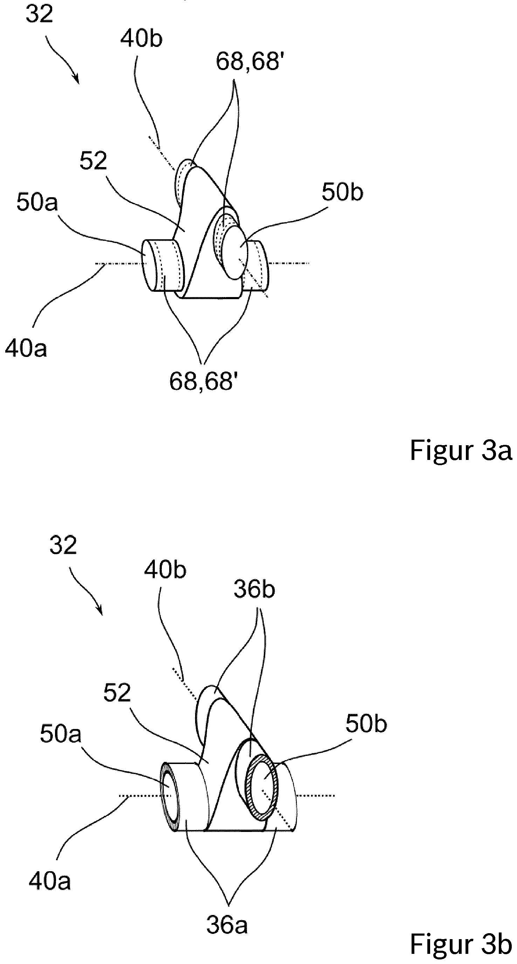

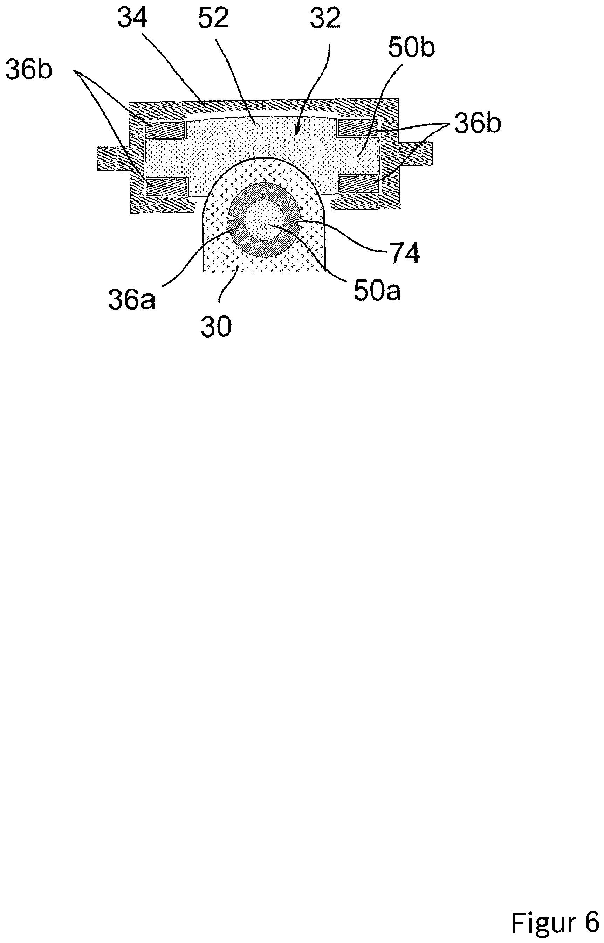

Figur 2 zeigt die gleiche Ausführungsform der Pendellaservorrichtung 10 aus Figur 1 in einem seitlichen Querschnitt. Neben den in Figur 1 dargestellten Merkmalen ist der Deckel des Batteriefaches 24 mit dahinter, im Inneren des Gehäuses 12 der Pendellaservorrichtung 10 angeordneten Batterien 26 zu erkennen. Zentralen und funktionswesentlichen Gegenstand der Pendellaservorrichtung 10 stellt die Pendelanordnung bestehend aus Pendel 28 und einer hier nicht näher dargestellten Pendelaufhängung 34 dar (vgl. hierfür insbesondere Figur 6). Das Pendel 28 besteht in der dargestellten Ausführungsform aus einem Optikträger 30 und einem Kreuzgelenk 32, das unter Verwendung der nicht näher dargestellten Pendelaufhängung 34 und unter Verwendung von Lagerschalen 36a,36b (vgl. insbesondere Figur 3b), insbesondere in Form einer kardanischen Lagerung, an dem Gehäuse 12 oder einem fest mit dem Gehäuse 12 der Pendellaservorrichtung 10 verbundenen Bestandteil befestigt ist. Die Komponenten des Pendels 28, d.h. Optikträger 30 und Kreuzgelenk 32, sind - abgesehen von den Lagerschalen 36a,36b - im Wesentlichen aus einem faserverstärkten duroplastischen Kunststoff mittels Kunststoff-Spritzgießtechnik hergestellt. Der Optikträger 30 dient der Aufnahme der wesentlichen optischen Elemente der Pendellaservorrichtung 10, hier vereinfacht dargestellt in Form einer Lasereinheit 20. Die Pendelaufhängung 34 ist aus thermoplastischem Kunststoff mittels Kunststoff-Spritzgießtechnik hergestellt.

Sofern das Pendel 28 nicht mittels einer Arretiervorrichtung 38 in einer eingenommenen Position arretiert wird, richtet sich das Pendel 28 selbstnivellierend um zwei Achsen, insbesondere um zwei Wellenachsen 40a,40b des Kreuzgelenks 32 (vgl. insbesondere Figur 3a, 3b), insbesondere unabhängig von der Ausrichtung des Gehäuses 12, allseitig frei im Gravitationsfeld der Erde aus. Der Winkelbereich der Ausrichtung des Gehäuses 12, in dem die selbstnivellierende Eigenschaft des Pendels 28, insbesondere dessen präzise Ausrichtung am Lot 42, gewährleistet ist, umfasst insbesondere 5 Grad bis 15 Grad von der Lotrechten, typischerweise 5 Grad oder 8 Grad. Sofern die Pendellaservorrichtung 10 eingeschaltet ist, sendet die Lasereinheit 20 optische Signale, insbesondere zumindest eine Laserebene, aus, die aus dem Gehäuse 12 durch die Austrittsöffnung 18 austritt, um eine optische Markierung, insbesondere zumindest eine Markierungslinie, auf einem Objekt zu erzeugen (eine Darstellung der Verkabelung der Lasereinheit 20 ist aus Gründen der Übersichtlichkeit ausgelassen).

Um die Einschwingdauer des im Rahmen des technisch Möglichen möglichst reibungsfrei aufgehängten Pendels 28 zu verkürzen, ohne die Einstellgenauigkeit der Endposition des Pendelns 28 im Gravitationsfeld zu verringern, weist das Pendel 28 eine Vorrichtung zur Wirbelstromdämpfung 44 nach dem Prinzip des Waltenhof'schen Pendels auf. Vorteilhaft wird somit erreicht, dass sich das Pendel 28 der Pendellaservorrichtung 10 - und damit auch der Optikträger 30 samt Lasereinheit 20 - nach dem Aufstellen der Pendellaservorrichtung 10 oder einem Stoß gegen den Pendellaservorrichtung 10 innerhalb kurzer Zeit, insbesondere innerhalb von 0,5 bis 5 Sekunden mit einer hohen Genauigkeit von wenigen zehnteln Millimeter im Gravitationsfeld der Erde ausrichtet. Insbesondere weist die Vorrichtung zur Wirbelstromdämpfung 44 eine Metallplatte 48 an der Unterseite des Pendels 28, insbesondere des Optikträgers 30, auf, das mittels Spritzgießtechnik einstückig, insbesondere form- und kraftschlüssig, mit diesem ausgebildet ist.

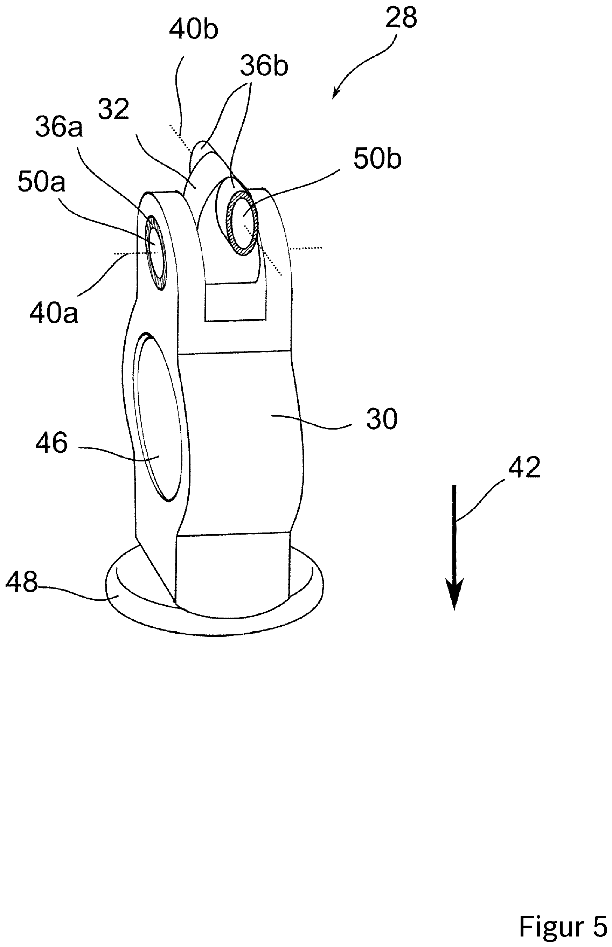

Die Aufnahme 46 des Pendels 28 der Pendellaservorrichtung 10 dient der Aufnahme und der präzisen Ausrichtung der Lasereinheit 20 in Bezug auf das Pendel 28 der Pendellaservorrichtung 10 und - da sich das Pendel frei gemäß Schwerefeld ausrichtet - in Bezug auf das Lot 42. In dem dargestellten Ausführungsbeispiel ist die Lasereinheit 20 in eine den Grundkörper des Optikträgers 30 axial durchsetzende Aufnahme 46 eingefügt (vgl. insbesondere auch Figur 5) und mit der Aufnahme 46 über nicht näher dargestellte Befestigungsmittel stabil verbunden. Es sei insbesondere angemerkt, dass die Lasereinheit 20 oder auch mehrere Lasereinheiten 20 in einer alternativen Ausführungsform der Aufnahme 46 auch stoff-, kraft und/oder formschlüssig an, in oder auf dem Optikträger 30 angeordnet sein kann.

Die Lasereinheit 20 ist nicht auf die Erzeugung einer speziellen Art der optischen Lasermarkierung beschränkt. Insbesondere kann die Lasereinheit 20 zur Erzeugung punkt- und/oder linienförmiger optischer Lasermarkierungen auf Objekten, genauer zur Projektion punkt- und/oder linienförmiger optischer Lasermarkierungen auf Objekte, oder beliebiger Kombinationen von solchen, vorgesehen sein. Ferner ist das in Figur 1 und Figur 2 dargestellte Ausführungsbeispiel nicht auf die Verwendung einer Aufnahme 46 in Verbindung mit einer Lasereinheit 20 begrenzt. In einer alternativen Ausführungsform der Pendellaservorrichtung 10 können unter Verwendung des gleichen erfindungsgemäßen Herstellungsverfahrens der Pendelanordnung beispielsweise auch mehrere, insbesondere zueinander ausgerichtete Aufnahmen 46', die wiederum je eine Lasereinheit 20' aufweisen, vorgesehen sein und gefertigt werden.

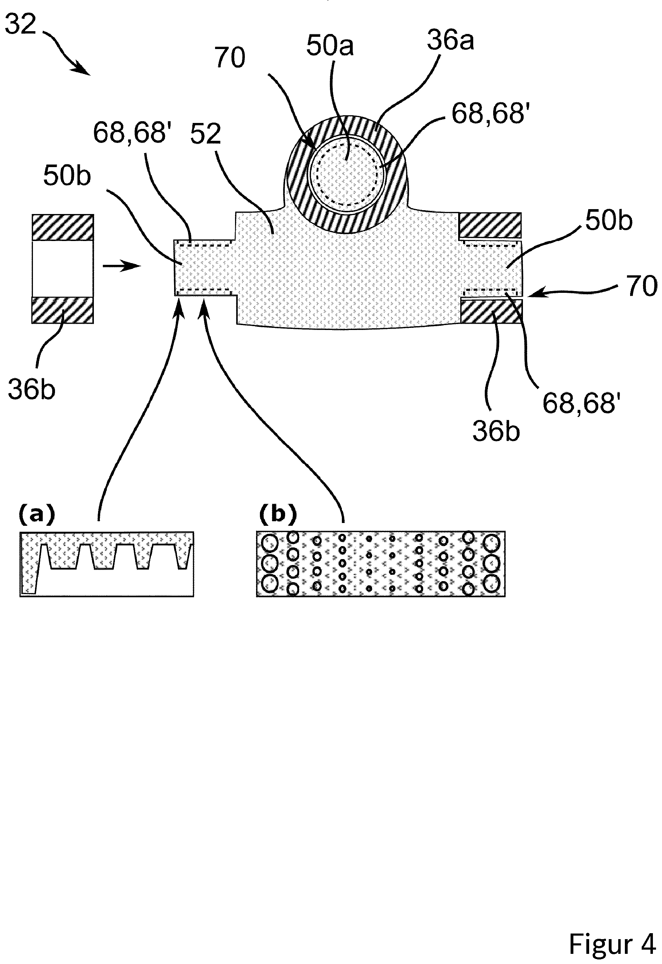

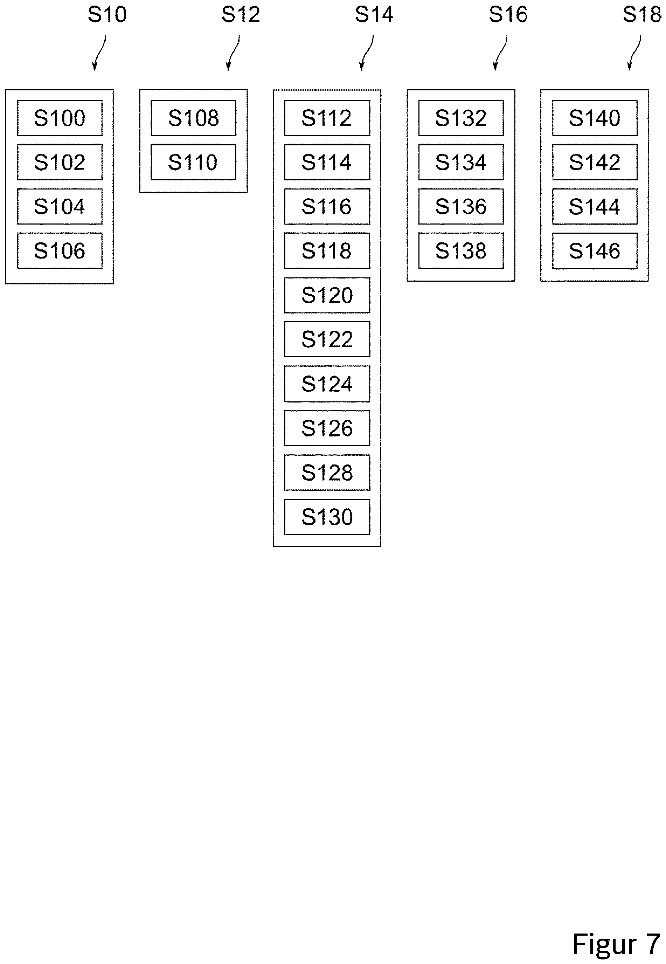

In Figur 3a und Figur 3b ist in perspektivischer Darstellung ein Kreuzgelenk 32 des Pendels 28 der Pendelanordnung dargestellt - in Figur 3a ohne platzierte bzw. angeordnete Lagerschalen 36a,36b, in Figur 3b mit auf die Wellen 50a,50b platzierten, insbesondere aufgesteckten Lagerschalen 36a,36b. Figur 4 zeigt einen schematischen Querschnitt der Ausführungsform des Kreuzgelenks aus den Figuren 3a und 3b (Größenverhältnisse nicht maßstabstreu, insbesondere hinsichtlich der Tiefe der Oberflächenkapillarstruktur 68'). Das Kreuzgelenk 32 des Pendels 28 ist in erfindungsgemäßem Herstellungsverfahren mittels Kunststoff-Spritzgießtechnik unter Formung eines Grundkörpers 52 sowie zweier zueinander orthogonaler, zumindest teilweise mikrostrukturierter Wellen 50a,50b gefertigt. Eine Darstellung des Herstellungsverfahrens des Kreuzgelenks 32 ist in Figur 7 gegeben.

Die Mikrostruktur 68 (im Folgenden auch synonym: "mikrostrukturierter Bereich 68") ist in Form einer Oberflächenkapillarstruktur 68' in einem Bereich auf den Wellen 50a,50b ausgebildet (innerhalb der gestrichelt dargestellten Linien, vgl. insbesondere Figur 3a und Figur 4). Der Bereich der Oberflächenkapillarstruktur 68' weist dabei einen Abstand zum Rand der Wellen 50a,50b in axialer Richtung von beispielsweise 1 mm auf. Die Oberflächenkapillarstruktur 68' dient der Aufnahme eines zwischen Lagerschale 36a,36b und mikrostrukturierter Welle 50a,50b eingebrachten Schmiermittels (hier nicht näher dargestellt). Das Schmiermittel wird nach Fertigstellung der Pendelanordnung der Pendellaservorrichtung 10 in einem weiteren Verfahrensschritt in einen Spalt 70 zwischen Lagerschale 36a,36b und Welle 50a,50b eingebracht, insbesondere eingespritzt. In Folge der auf den Wellen 50a,50b vorhandenen Mikrostruktur 68, insbesondere deren Oberflächenkapillarstruktur 68', wird das Schmiermittel in dem Bereich zwischen Lagerschale 36a,36b und Welle 50a,50b gehalten. Durch den Kapillareffekt des Schmiermittels in der Oberflächenkapillarstruktur 68' wird einer Verarmung des Schmiermittels an der Reibstelle zwischen Lagerschale 36a,36b und Welle 50a,50b der fertiggestellten Pendellaservorrichtung 10 entgegengewirkt.

In der Figur 3b und der Figur 4 sind die Lagerschalen 36a,36b - wie auch in den in Figuren 2, 5, und 9 gezeigten Ausführungsbeispielen - als ringförmige Gleitlager realisiert und werden in einem weiteren Verfahrensschritt (vgl. insbesondere Figur 7) aus einem hier nicht näher dargestellten, in Form eines Rohres extrudierten Teflonmaterial geschnitten. Dabei weisen die Lagerschalen 36a,36b eine Innenfläche und eine Außenfläche mit einem Innendurchmesser bzw. einem Außendurchmesser auf. Ferner weisen die Lagerschalen 36a,36b jeweils zumindest eine Nut 74 auf (vgl. insbesondere Figur 6). Die Lagerschalen 36a,36b werden in erfindungsgemäßem zweiten Verfahrensschritt auf die zumindest teilweise mikrostrukturierten Bereiche 68 beider Wellen 50a,50b des Kreuzgelenks 32 gesteckt (in Figur 4 durch einen Pfeil angedeutet). In der Figur 3b befinden sich die Lagerschalen 36a,36b in angeordnetem Zustand auf den Wellen 50a,50b des Kreuzgelenks 32. Dabei wird der mikrostrukturierte Bereich 68 der Wellen 50a,50b, wie in Figur 4 (rechte Seite) gezeigt, vollständig von den Lagerschalen 36a,36b überragt und bedeckt bzw. abgedeckt. Die Lagerschalen 36a,36b weisen einen Innendurchmesser auf, der um 0.2 mm größer ist als der Außendurchmesser der Wellen 50a,50b. Folglich besteht zwischen den Wellen 50a,50b und den Lagerschalen 36a,36b in angeordnetem bzw. aufgesteckten Zustand der Lagerschalen 36a,36b ein dünner Spalt 70 von 0.2 mm.

Die Lagerschalen 36a,36b dienen in Verbindung mit dem auf die Mikrostruktur 68, insbesondere die Oberflächenkapillarstruktur 68', aufgebrachten Schmiermittel der besonders leichtgängigen, insbesondere nahezu reibungsfreien Drehbewegung des Kreuzgelenks 32 um die durch je zwei Lagerschalen 36a,36b definierten Wellenachsen 40a,40b.

In Figur 4a und 4b sind ferner beispielhafte Ausformungen einer Oberflächenkapillarstruktur 68' gezeigt. Figur 4a zeigt dabei eine Schnittansicht der Oberflächenkapillarstruktur 68' der Welle 50b zu deren Randbereich hin (Abschluss der Welle 50b). Die Figur 4b stellt eine Aufsicht auf die Oberflächenkapillarstruktur 68' der Welle 50b in einem mittleren Bereich der Oberflächenkapillarstruktur 68' dar. Entsprechend der Darstellungen besteht die Oberflächenkapillarstruktur 68' aus einer Vielzahl an Erhebungen in Form von Domen. Der Durchmesser der Dome nimmt mit zunehmenden Abstand vom äußeren Rand der Welle 50b (linker Pfeil) des Kreuzgelenks 32 nach innen (rechter Pfeil) hin ab und dann wieder zu, wobei der Abstand benachbarter Reihen von Domen, d.h. der Abstand der Mittelpunkte der aus jeweils identischen Domen gebildeten Reihen, gleichbleibend ist. In dieser exemplarischen Ausführungsform sind die durch die Dome gebildeten Fließkanäle im Innern der Oberflächenkapillarstruktur 68' relativ breit mit Abständen zwischen ca. 50 µm und ca. 100 µm, während die Fließkanäle zum Außenbereich (linkes und rechtes Ende des Bereichs 68,68') der Oberflächenkapillarstruktur 68' hin zunehmend schmaler werden, sodass dort Fließkanäle mit einer Breite von zwischen etwa 1 µm und etwa 40 µm vorhanden sind. Am äußersten Ende der Oberflächenkapillarstruktur 68' befindet sich eine erhöhte Barriere, die dem Ausfließen des Schmiermittels aus der Oberflächenkapillarstruktur 68' entgegenwirkt.

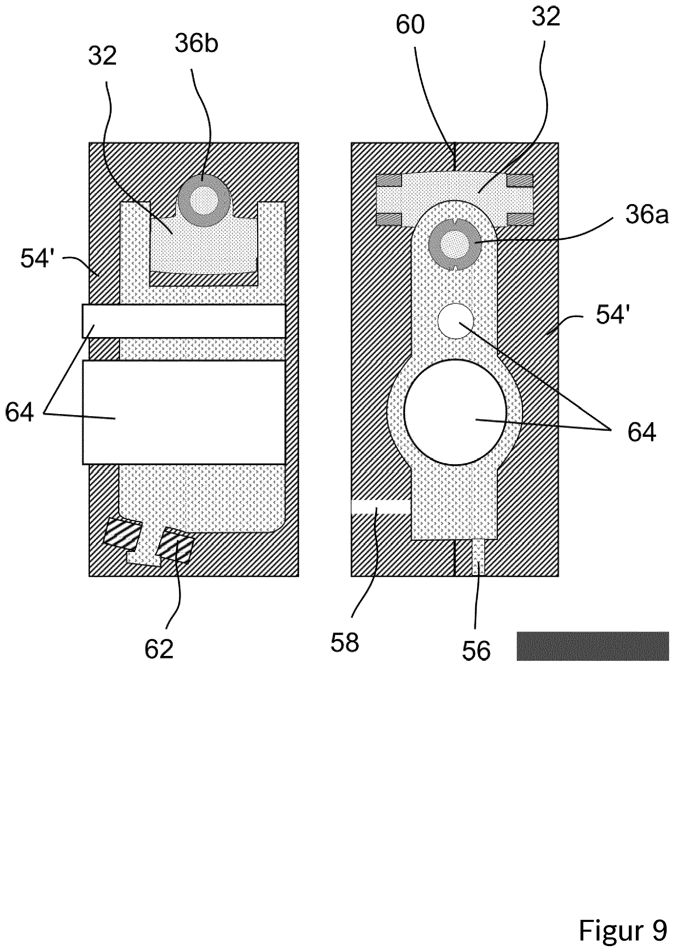

Figur 5 zeigt eine perspektivische Darstellung einer Ausführungsform des Pendels 28, bestehend aus Kreuzgelenk 32, Optikträger 30 sowie einer Metallplatte 48 zum aus Austarieren des Pendels 28, die gleichzeitig auch als Gegenstück einer Wirbelstrombremse 44 (vgl. Figur 2) dient. Der Optikträger 30 ist in zumindest in einem Winkelbereich frei beweglich um die Wellenachse 40a des Kreuzgelenks 32 rotativ drehbar, d.h. pendelbar gelagert, wobei dieser Winkelbereich insbesondere mehr als 15 Grad, bevorzugt mehr als 30 Grad, besonders bevorzugt mehr als 45 Grad umfasst. Der Optikträger 30 wird von einer Aufnahme 46 axial in seiner Tiefe durchsetzt. Die Aufnahme 46 dient der Aufnahme und Befestigung einer Lasereinheit 20 an dem Optikträger 30. Der Optikträger 30 des Pendels 28 der Pendelanordnung ist aus Kunststoff, bevorzugt aus verstärktem duroplastischem Kunststoff, mittels Spritzgießtechnik in Anwendung des erfindungsgemäßen Herstellungsverfahren einstückig, insbesondere form- und kraftschlüssig, mit dem Kreuzgelenk 32, insbesondere mit zwei eine Welle 50a umgebenden Lagerschalen 36a (vgl. auch Figur 3b) gefertigt. Die Aufnahme 46 wird in demselben Verfahrensschritt des erfindungsgemäßen Herstellungsverfahrens unter Verwendung zumindest eines Mittels zur Erzeugung einer Hinterschneidung mittels Kunststoff-Spritzgießtechnik ausgeformt. Das in Figur 5 gezeigte Pendel 28 wird unter Verwendung der zwei weiteren, eine weitere Welle 50b umgebenden Lagerschalen 36b (vgl. auch Figur 3b) an einer hier nicht näher dargestellten Pendelaufhängung 34 ebenfalls um die Wellenachse 40b der Welle 50b in zumindest einem Winkelbereich frei pendelbar angeordnet (vgl. insbesondere Figur 6). Eine Darstellung des Herstellungsverfahrens des Optikträgers 30 ist in Figur 7 und Figur 9 gegeben.

In Figur 6 ist ein schematischer Schnitt dargestellt, der das Kreuzgelenk 32 mit zwei zueinander orthogonalen Wellen 50a,50b und den darauf aufgesteckten Lagerschalen 36a,36b sowie den Ansatz eines an Lagerschalen 36a einstückig ausgebildeten Optikträgers 30 darstellt. Die Welle 50b samt freier Lagerschalen 36b des Kreuzgelenks 32 wird zu Zwecken der Anordnung des Pendels 28 an dem Gehäuse 12 der Pendellaservorrichtung 10 derart von zwei Komponenten der Pendelaufhängung 34 umfasst, dass eine Fixierung der Lagerschalen 36b in der Pendelaufhängung 34 gewährleistet ist, ohne die freie rotative Beweglichkeit des Kreuzgelenks 32 um die Welle 50b durch die Pendelaufhängung 34 zumindest in einem Winkelbereich zu behindern. Dieser Winkelbereich umfasst insbesondere mehr als 15 Grad, bevorzugt mehr als 30 Grad, besonders bevorzugt mehr als 45 Grad. Die Pendelaufhängung 34 wird in erfindungsgemäßen Herstellungsverfahren mittels Kunststoff-Spritzgießtechnik aus Kunststoff, bevorzugt aus faserverstärktem thermoplastischem Kunststoff, gefertigt, insbesondere als zweiteiliges, zusammensteckbares Bauteil. Die zusammensteckbaren Komponenten des Bauteils weisen nicht näher dargestellte Mittel zur Realisierung einer Hak- und/oder Rastverbindung auf. Das erfindungsgemäße Herstellungsverfahren zur Fertigung der Pendelaufhängung 34 ist in Figur 7 näher dargestellt.

Figur 7 zeigt in einem schematischen Verfahrensdiagramm die wesentlichen Verfahrensschritte des erfindungsgemäßen Herstellungsverfahrens. In einem ersten Verfahrensschritt S10, der sich wiederum in Unterverfahrensschritte S100 bis S106 untergliedert, wird ein Kreuzgelenk 32 des Pendels 28 der Pendelanordnung mittels Kunststoff-Spritzgießtechnik unter Formung zweier orthogonaler, zumindest teilweise mikrostrukturierter Wellen 50a,50b gefertigt. In der dargestellten Ausführungsform des ersten Verfahrensschritts S10 wird das Spritzgießwerkzeug 54 zunächst in Unterverfahrensschritt S100 geschlossen. Unter Verwendung einer Einspritzdüse wird anschließend in Unterverfahrensschritt S102 insbesondere faserverstärkter duroplastischer Kunststoff, beispielsweise Bulk-Molding-Compound (BMC), eine Phenolformmasse (PF) oder ein Epoxidharz (EP) in die Kavität des Spritzgießwerkzeugs 54 eingespritzt, wobei der Kunststoff den zur Verfügung stehenden Raum der Kavität raumfüllend ausfüllt. Dabei werden Negativformen des Spritzgießwerkzeugs 54 von dem Kunststoff umflossen und somit abgeformt. Insbesondere wird in diesem Unterverfahrensschritt auch die Oberflächenkapillarstruktur 68' als stoffschlüssiger Bestandteil der Wellen 50a,50b abgeformt. Nach Beenden des Einspritzvorganges (Unterverfahrensschritt S102) härtet der eingespritzte Kunststoff, insbesondere der Duroplast, unter Temperatureinfluss, insbesondere erhöhter Temperatur, aus (Unterverfahrensschritt S104). Auf diese Weise wird unter erhöhter Temperatur, insbesondere zwischen 130 Grad Celsius bis 180 Grad Celsius, der Duroplast thermisch aktiviert und chemisch vernetzt, so dass ein Bauteil hoher mechanischer und thermischer Beständigkeit resultiert. Abschließend wird nach Abkühlen des Spritzgießwerkzeugs 54 dieses in Unterverfahrensschritt S106 wieder geöffnet und das gefertigte Kreuzgelenk 32 aus dem Spritzgießwerkzeug 54 entnommen.

In einer Ausführungsform des Herstellungsverfahrens wird ein Duroplast verwendet, der sich während des Aushärtens in Unterverfahrensschritt S104 im Spritzgießwerkzeug 54 geringfügig ausdehnt und/oder mit einer positiven Schwindung eingestellt ist. Auf diese Weise können besonders enge Toleranzen des Spritzgießwerkzeugs 54 optimal abgeformt werden. Durch eine derartige, hochpräzise Abformung des Spritzgießwerkzeugs 54 kann ebenfalls das zu fertigende Bauelement, insbesondere das Kreuzgelenk 32 und/oder der Optikträger 30 in Verfahrensschritt S16, sehr präzise und in besonders engen Toleranzbereichen gefertigt werden.

In einer Ausführungsform wird ein Duroplast mit einer kurzen Vernetzungszeit verwendet. Somit kann die Dauer, die das Spritzgussbauteil im Spritzgießwerkzeug 54 zum Aushärten in Unterverfahrensschritt S104 verweilt, vorteilhaft reduziert werden und ein effizienterer Herstellungsprozess erreicht werden.

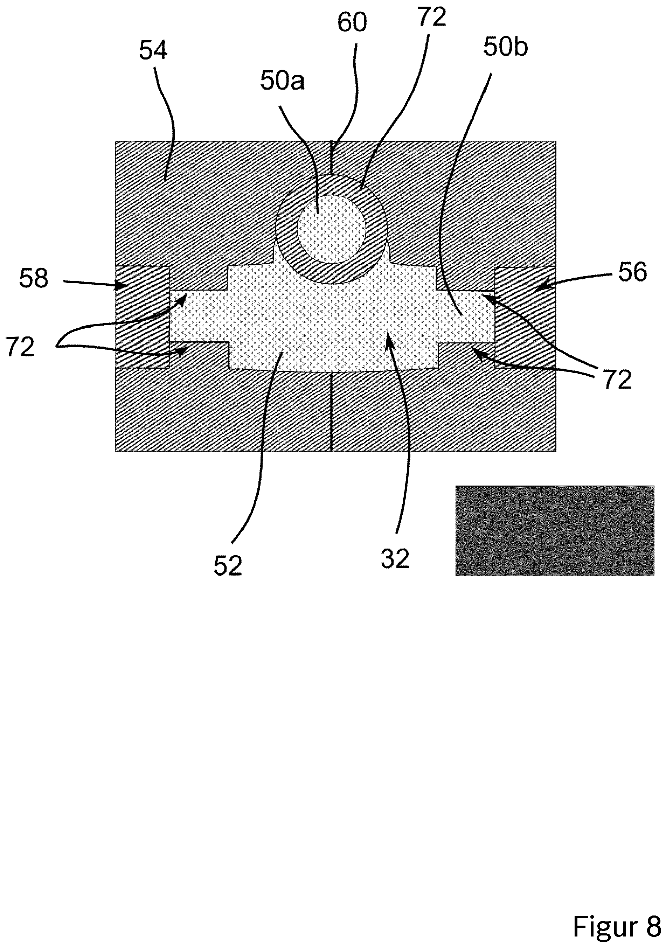

Es sei an dieser Stelle insbesondere auf Figur 8 verwiesen, die in einer schematischen Schnitt-Darstellung ein Spritzgießwerkzeug 54 darstellt, in dem sich vier (mikro-)strukturierte Bereiche 72 als Negativform der zu realisierenden Oberflächenkapillarstruktur 68' befinden. Zwei dieser Bereiche 72 befinden sich unmittelbar an der Einspritzseite 56 bzw. an der Auslassseite 58 des Spritzgießwerkzeugs 54. Ferner ist in der Figur 8 eine von gegebenenfalls mehreren Trennebenen 60 des Spritzgießwerkzeugs 54 zu erkennen, die in Unterverfahrensschritt S106 der Öffnung des Spritzgießwerkzeugs 54 und somit der Entnahme des gefertigten Kreuzgelenks 32 dient. Die Figur 8 zeigt das Spritzgießwerkzeug 54 im erfindungsgemäßen Herstellungsverfahren zum Zeitpunkt des ersten Verfahrensschritts S10, genauer während des Aushärtens des duroplastischen Kunststoffs in Unterverfahrensschritt S104.

Figur 7 zeigt ferner einen zweiten Verfahrensschritt S12 mit den Unterverfahrensschritten S108 bis S110. In dem Unterverfahrensschritt 108 werden die Lagerschalen 36a,36b aus einem rohrförmigen Teflon-Halbzeug geschnitten. Dabei weisen die Lagerschalen 36a,36b zumindest eine Nut 74 auf (vgl. insbesondere Figur 6). Anschließend werden die derartig vorbereiteten Lagerschalen 36a,36b erfindungsgemäß in Unterverfahrensschritt S110 auf die zumindest teilweise mikrostrukturierten Bereiche 68 zumindest einer Welle 50a, hier bevorzugt beider Wellen 50a,50b, des Kreuzgelenks 32 platziert, insbesondere gesteckt (vgl. insbesondere auch Figur 4). Dabei entsteht zwischen den Wellen 50a,50b und den Lagerschalen 36a,36b jeweils ein Spalt 70 von insbesondere 0.2 mm.

In dem dritten Verfahrensschritt S14 des erfindungsgemäßen Herstellungsverfahrens wird der Optikträger 30 des Pendels 28 der Pendelanordnung durch Umspritzen zweier, die Welle 50a des Kreuzgelenks 32 umgebenden Lagerschalen 36a mittels Kunststoff-Spritzgießtechnik einstückig mit den Lagerschalen 36a gefertigt und um die Welle 50a drehbar an das Kreuzgelenk 32 angebunden. Dazu wird in einem ersten Unterverfahrensschritt S112 das in dem ersten Verfahrensschritt S10 gefertigte Kreuzgelenk 32 in ein weiteres, insbesondere zweites, Spritzgießwerkzeug 54' eingelegt. Ebenfalls können in dem Unterverfahrensschritt S112 auch weitere Komponenten des Optikträgers 30, insbesondere beispielsweise eine Masse 62 zum Austarieren des Pendels 28 oder eine Metallplatte 48 als Bestandteil einer Wirbelstrombremse 44, oder andere, für den Optikträger 30 notwendige oder sinnvolle Komponenten, in das Spritzgießwerkzeug 54' eingelegt werden. Anschließend wird in Unterverfahrensschritt S114 das Spritzgießwerkzeug 54' geschlossen. Um während des Spritzgießverfahrens eine Aufnahme 46 zur Aufnahme einer Lasereinheit 20 in dem Optikträger 30 ausformen zu können, wird ein Schieber 64 als Mittel zur Erzeugung einer Hinterschneidung in Unterverfahrensschritt S116 seitlich in das Spritzgießwerkzeug 54' eingeführt. In Summe entsteht also in dem Spritzgießwerkzeug 54' eine Kavität, die unmittelbar an die Formgrenzen des Spritzgießwerkzeugs 54', den seitlich eingeschobenen Schieber 64, an die Außenseiten zweier Lagerschalen 36a sowie ggf. weitere Komponenten wie die Masse 62 und/oder die Metallplatte 48 grenzt. Bevorzugt umschließt die Kavität die Außenseiten der zwei Lagerschalen 36a vollständig. In Unterverfahrensschritt 118 wird das Spritzgießwerkzeug 54' erwärmt, wobei sich die Lagerschalen 36a,36b ausdehnen. Dabei verkleinert sich der Innendurchmesser der Lagerschalen 36a,36b zumindest teilweise reversibel, sodass sich die Innenflächen der Lagerschalen 36a,36b eng an die Wellen 50a,50b und insbesondere eng an die Bereiche der Oberflächenkapillarstruktur 68' der Wellen 50a,50b legen. Insbesondere schließen die Lagerschalen 36a,36b in Folge der thermischen Expansion die mikrostrukturierten Bereiche 68 der durch die Lagerschalen 36a,36b umgebenen Wellen 50a,50b dicht ab, sodass die mikrostrukturierten Bereiche 68 vor eingespritztem Kunststoff-Material geschützt werden. Unter Verwendung einer Einspritzdüse wird dann in Unterverfahrensschritt S120 faserverstärkter duroplastischer Kunststoff zur Erzeugung des Optikträgers 30 in das Spritzgießwerkzeug 54' eingespritzt. Der Kunststoff umfließt entsprechend Ausformung der Kavität den seitlich eingeschobenen Schieber, die zwei Lagerschalen 36a und die ggf. weiteren Komponenten wie Masse 62 und/oder Metallplatte 48. Anschließend wird das Spritzgießwerkzeug 54' in Unterverfahrensschritt S122 wieder abgekühlt, wobei sowohl der duroplastischen Kunststoff aushärtet als auch in Folge der thermischen Kontraktion der Lagerschalen 36a,36b wieder ein dünner Spalt 70 zu den mikrostrukturierten Wellen 50a,50b entsteht. Nach dem Abkühlprozess sind die Lagerschalen 36a,36b wieder frei drehbar an den Wellen 50a,50b angeordnet. In Unterverfahrensschritt S124 wird der seitlich eingeführte Schieber 64 wieder aus dem gebildeten Optikträger 30 entfernt. Gegebenenfalls werden an dieser Stelle auch weitere seitlich eingeführte Schieber 64', die zur Erzeugung von Hinterschneidungen des Optikträgers 30 in das Spritzgießwerkzeug 54' eingeführt wurden, ebenfalls aus dem Optikträger 30 entfernt. In weiteren, insbesondere optionalen, Unterverfahrensschritten lassen sich weitere Material-Komponenten in das Spritzgießwerkzeug 54' einspritzen und somit insbesondere an den Optikträger 30 anspritzen (Unterverfahrensschritt S126). Derartige weitere Material-Komponenten können beispielsweise einem definierten Austarieren des Pendels 28 oder zur Ausgestaltung einer Metallplatte 48 zur Realisierung einer Wirbelstrombremse dienen. In dem optionalen Unterverfahrensschritt S128 härten diese zusätzlich eingespritzten Komponenten ebenfalls aus. Sofern alle Einspritzvorgänge und Aushärtevorgänge insbesondere verschiedener Material-Komponenten beendet sind, wird in Unterverfahrensschritt S130 das Spritzgießwerkzeug 54' wieder geöffnet und das gefertigte, einstückige Pendel 28 bestehend aus Kreuzgelenk 32 und Optikträger 30 mit Aufnahme 46 sowie gegebenenfalls weiterer Komponenten wie Masse 62 und/oder Metallplatte 48 aus dem Spritzgießwerkzeug 54' entnommen (Unterverfahrensschritt S130).

Auf diese Weise wird der Optikträger 30 mittels Kunststoff-Spritzgießtechnik einstückig mit dem Kreuzgelenk 32 gefertigt, sodass der Optikträger 30 und das Kreuzgelenk 32 fest und innig, insbesondere form- und kraftschlüssig, miteinander verbunden gefertigt werden und nicht als mehrere aneinander gefügte Bauteile erscheinen. Die Komponenten lassen sich nicht mehr voneinander lösen, ohne dabei zerstört zu werden.

Vorteilhaft wird das Pendel 28 der Pendelanordnung einer Pendellaservorrichtung 10 mit besonders wenigen Montageschritten und besonders wenigen Einzelkomponenten gefertigt. Insbesondere wird auf diese Weise mit lediglich drei Verfahrensschritten S10, S12 und S14 des Herstellungsverfahrens eine Pendelanordnung gefertigt, bei der die Anzahl verwendeter Bauteile oder Komponenten verringert ist. Es ist keine aufwendige Herstellung von Einzelkomponenten sowie keine Montage einer Vielzahl von Einzelkomponenten durchzuführen. Ferner werden durch die Fertigung des Pendels 28 nach erfindungsgemäßem Herstellungsverfahren auf aufwendige Bearbeitungs- und/oder Justierschritte, bei denen Einzelkomponenten im Herstellungsverfahren der Pendelanordnung zeit- und kostenintensiv möglichst präzise positioniert und in ihren Führungen aufwendig angepasst werden, überflüssig. Da im erfindungsgemäßen Herstellungsverfahren sowohl das Kreuzgelenk 32 als auch der Optikträger 30 mittels Kunststoff-Spritzgießtechnik aufeinander aufbauend und aufeinander angepasst hergestellt werden, muss keine Anpassung von Positionen sowie keine Anpassung von Gelenkwellen oder Führungen der Wellen 50a,50b und Kugellager in typischerweise aufwendigen Zerspanungsprozessen durchgeführt werden. Ferner werden Fertigungstoleranzen verringert und die Herstellung der Pendellaservorrichtung 10 hinsichtlich Korrektur und/oder Ausgleich von Fertigungstoleranzen vereinfacht und beschleunigt. Ebenfalls kann auf teure Wälzlager zur Realisierung der Pendelanordnung verzichtet werden.

An dieser Stelle sei insbesondere auf Figur 9 verwiesen, die ein Spritzgießwerkzeug 54' in seitlichem Schnitt aus zwei orthogonalen Richtungen gesehen darstellt. In dem zweiteiligen Spritzgießwerkzeug 54', trennbar mittels zumindest einer Trennebene 60, befindet sich eingelegt das in dem ersten Verfahrensschritt S10 des erfindungsgemäßen Herstellungsverfahren gefertigte Kreuzgelenk 32. Ferner ist in das Spritzgießwerkzeug 54' eine Masse 62 zum Austarieren des Optikträgers 30 eingelegt. Zwei Schieber 64 zur Erzeugung einer Hinterschneidung sind seitlich in das Spritzgießwerkzeug 54' eingeführt, so dass die Kavität des Spritzgießwerkzeugs 54' axial durchsetzt wird. Die Figur 9 zeigt eine Ausführungsform des Spritzgießwerkzeugs 54' aus dem erfindungsgemäßen Herstellungsverfahren zum Zeitpunkt des zweiten Verfahrensschritts S12, genauer zum Zeitpunkt des Aushärtens des duroplastische Kunststoffmaterial in der Spritzgießform 54' unter erhöhter Temperatur in Unterverfahrensschritt S118. Der Optikträger 30 des Pendels 28 der Pendelanordnung ist mittels Kunststoff-Spritzgießtechnik einstückig, insbesondere form- und kraftschlüssig mit dem Kreuzgelenk 32 gefertigt.

Figur 7 zeigt ferner einen weiteren Verfahrensschritt S16 als Blockdiagramm, in dem eine Pendelaufhängung 34 mittels Kunststoff-Spritzgießtechnik gefertigt wird, insbesondere als zweiteiliges, zusammensteckbares Bauteil gefertigt wird. Die Pendelaufhängung 34 wird derart ausgeformt, dass sie einen in Folge des Zusammensteckens gebildeten Hohlraum aufweist, der geeignet ist, zur Aufhängung des Kreuzgelenks 32 die Lagerschalen 36b derart zumindest teilweise zu umfassen, dass eine stabile Anordnung des Kreuzgelenks 32 an die Pendelaufhängung 34 gewährleistet ist, wobei gleichzeitig eine freie Beweglichkeit des Kreuzgelenks 32 um die durch die Lagerschalen 36b definierte Wellenachse 40b zumindest in einem Winkelbereich uneingeschränkt möglich ist. Insbesondere beträgt dieser Winkelbereich mehr als 15 Grad, bevorzugt mehr als 30 Grad, besonders bevorzugt mehr als 45 Grad. Ferner weisen die beiden zusammensteckbaren Hälften der Pendelaufhängung 34 Mittel zur Realisierung einer Halte- und/oder Rastverbindung in zusammengestecktem Zustand, beispielsweise Haken und Öse, Clips oder dergleichen, auf. Der weitere Verfahrensschritt S16 des erfindungsgemäßen Herstellungsverfahrens umfasst Unterverfahrensschritte S132 bis S138, in denen ein weiteres, insbesondere drittes, Spritzgießwerkzeug 54" zunächst geschlossen wird (Unterverfahrensschritt S132), in einem weiteren Unterverfahrensschritt S134 glasfaserverstärkter thermoplastischer Kunststoff in das Spritzgießwerkzeug 54" eingespritzt wird, das Spritzgießwerkzeug 54" samt eingespritzter Kunststoff-masse ausgeheizt wird, so dass der thermoplastische Kunststoff vernetzt und aushärtet (Unterverfahrensschritt S136), sowie abschließend die Pendelaufhängung 34, insbesondere als zweiteiliges zusammensteckbares Bauteil, in Unterverfahrensschritt S138 aus dem Spritzgießwerkzeug 54" entnommen wird.

Die Montierung der Pendelanordnung in die Pendellaservorrichtung 10 findet in einem weiteren Verfahrensschritt S18 des erfindungsgemäßen Herstellungsverfahrens statt. Zunächst wird in Unterverfahrensschritt S140 das Schmiermittel zwischen den Lagerschalen 36a,36b und den Wellen 50a,50b des Kreuzgelenks 32 eingespritzt. Dabei verteilt sich das Schmiermittel gleichmäßig in dem mikrostrukturierten Bereich 68, insbesondere in der Oberflächenkapillarstruktur 68', der Wellen 50a,50b. In Folge der auf den Wellen 50a,50b vorhandenen Mikrostruktur 68, insbesondere deren Oberflächenkapillarstruktur 68', wird das Schmiermittel in dem Bereich zwischen Lagerschale 36a,36b und Welle 50a,50b gehalten und entfaltet dort eine selbstschmierende Wirkung des Gleitlagers. Anschließend wird das Pendel, bestehend aus Optikträger 30, Kreuzgelenk 32 sowie gegebenenfalls weiterer Komponenten wie Masse 62 und/oder Metallplatte 48, derart an der Pendelaufhängung 34 angeordnet, dass der in Folge des Zusammensteckens der Pendelaufhängung 34 gebildeten Hohlraum der Pendelaufhängung 34 die zwei Lagerschalen 36b des Kreuzgelenks 32 derart zumindest teilweise umfasst, dass eine stabile Anordnung des Kreuzgelenks 32 an der Pendelaufhängung 34 gewährleistet ist, wobei gleichzeitig eine freie Beweglichkeit des Kreuzgelenks 32 um die durch die Lagerschalen 36b definierte Wellenachse 40b, somit ein Pendeln des Pendels 28 bezogen auf die Pendelaufhängung 34, zumindest in einem Winkelbereich uneingeschränkt möglich ist (Unterverfahrensschritt 142). Durch Verwendung der zusammensteckbaren Pendelaufhängung, die die eine der zwei zueinander orthogonalen Wellen 50b in einem Hohlraum zwischen beiden zusammensteckbaren Teilen umfasst und stabil befestigt, werden in erfindungsgemäßem Herstellungsverfahren der Pendelaufhängung eine besonders präzise Haltung und Führung des Kreuzgelenkes 32 unter Einhaltung enger Toleranzen erreicht. Die Verwendung weiterer Hilfsmittel zur präzisen Anpassung und Befestigung, insbesondere auch Nacharbeitung und zum Austarieren des Pendels an der Pendelaufhängung, ist nicht nötig. In Unterverfahrensschritt S144 wird die Lasereinheit 20 in der Aufnahme 46 des Optikträgers 30 platziert, ausgerichtet und befestigt. Abschließend wird in Unterverfahrensschritt 146 die Pendelanordnung bestehend aus Pendel 28 und Pendelaufhängung 34 in einer Pendellaservorrichtung 10 montiert. Insbesondere wird dazu die Pendelaufhängung 34 am Gehäuse 12 oder an einem mit dem Gehäuse 12 verbundenen Teil stabil angeordnet. Das Pendel 28 kann sich, derart mittels der Pendelaufhängung 34 pendelbar in der Pendellaservorrichtung 10 montiert, lotrecht im Gravitationsfeld und im Wesentlichen unabhängig von der Ausrichtung des Gehäuses 12 der Pendellaservorrichtung 10, ausrichten.

## Patentansprüche

1. Herstellungsverfahren für eine Pendelanordnung einer Pendellaservorrichtung (10), zumindest aufweisend
• einen ersten Verfahrensschritt (S10), bei dem ein Kreuzgelenk (32) eines Pendels (28) der Pendelanordnung mittels Kunststoff-Spritzgießtechnik unter Formung zweier orthogonaler, zumindest teilweise mikrostrukturierter Wellen (50a, 50b) gefertigt wird,
• einen zweiten Verfahrensschritt (S110), bei dem zumindest zwei Lagerschalen (36a) auf die zumindest teilweise mikrostrukturierten Bereiche (68) zumindest einer Welle (50a) des Kreuzgelenks (32) platziert werden,
• einen dritten Verfahrensschritt (S14), bei dem ein Optikträger (30) des Pendels (28) der Pendelanordnung durch Umspritzen zumindest zweier, eine Welle (50a) des Kreuzgelenks (32) umgebenden Lagerschalen (36a) mittels Kunststoff-Spritzgießtechnik einstückig mit den Lagerschalen (36a) gefertigt und um die eine Welle (50a) drehbar an das Kreuzgelenk (32) angebunden wird.

2. Herstellungsverfahren nach Anspruch 1, **dadurch gekennzeichnet, dass** die Lagerschalen (36a, 36b) in zumindest einem weiteren Verfahrensschritt (S108) aus einem Thermoplast-Halbzeug, insbesondere aus einem extrudierten Teflon- oder Polyoxymethylen- oder Polyketon-Halbzeug, gefertigt werden.

3. Herstellungsverfahren nach einem der Ansprüche 1-2, **dadurch gekennzeichnet, dass** die Lagerschalen (36a, 36b) vor Umspritzen mittels Kunststoff-Spritzgießtechnik erwärmt werden, wobei sich in Folge einer thermischen Expansion der Innendurchmesser der Lagerschalen (36a, 36b) verkleinert.

4. Herstellungsverfahren nach einem der Ansprüche 1-3, insbesondere nach Anspruch 3, **dadurch gekennzeichnet, dass** die Lagerschalen (36a, 36b) nach Umspritzen mittels Kunststoff-Spritzgießtechnik abgekühlt werden, wobei in Folge der thermischen Kontraktion/Schrumpfung ein dünner Spalt (70) zu den zumindest teilweise mikrostrukturierten Wellen (50a, 50b) entsteht.

5. Herstellungsverfahren nach einem der Ansprüche 1-4, **dadurch gekennzeichnet, dass** in einem weiteren Verfahrensschritt (S140) ein Schmiermittel in den Spalt (70) zwischen Lagerschale (36a, 36b) und zumindest teilweise mikrostrukturierter Welle (50a, 50b) eingebracht wird.

6. Herstellungsverfahren nach einem der Ansprüche 1-5, **dadurch gekennzeichnet, dass** im Kunststoff-Spritzgießverfahren zumindest eine Aufnahme (46) in dem Optikträger (30) zur Aufnahme einer Lasereinheit (20) ausgeformt wird, insbesondere unter Verwendung eines Mittels zum Erzeugen einer Hinterschneidung (64) ausgeformt wird.

7. Herstellungsverfahren nach einem der Ansprüche 1-6, **dadurch gekennzeichnet, dass** in einem weiteren Verfahrensschritt (S16) eine Pendelaufhängung (34) mittels Kunststoff-Spritzgießtechnik gefertigt wird, insbesondere als zweiteiliges, zusammensteckbares Bauteil gefertigt wird.

8. Herstellungsverfahren nach Anspruch 7, **dadurch gekennzeichnet, dass** in einem weiteren Verfahrensschritt (S142) das Pendel (28) pendelbar an der Pendelaufhängung (34) angeordnet wird.

9. Herstellungsverfahren nach Anspruch 7 oder 8, **dadurch gekennzeichnet, dass** in einem weiteren Verfahrensschritt (S146) die Pendelanordnung bestehend aus Pendel (28) und Pendelaufhängung (34) in einer Pendellaservorrichtung (10) montiert wird.

10. Selbstnivellierende Pendellaservorrichtung (10), aufweisend zumindest ein Gehäuse (12), ein in dem Gehäuse (12) mittels Pendelaufhängung (34) pendelbar angeordnetes Pendel (28) sowie zumindest eine an einem Optikträger (30) des Pendels (28) angebrachte Lasereinheit (20) zur Erzeugung zumindest einer optischen Markierung, insbesondere hergestellt nach einem Verfahren gemäß zumindest einem der Ansprüche 1-9, **dadurch gekennzeichnet, dass** ein Kreuzgelenk (32) des Pendels (28) und der Optikträger (30) des Pendels (28) mittels Kunststoff-Spritzgießtechnik einstückig realisiert sind und der Optikträger (30) um zumindest eine Welle (50a) des Kreuzgelenks (32) drehbar, insbesondere pendelbar, an das Kreuzgelenk (32) angebunden ist, wobei die drehbare Anbindung unter Verwendung einer Oberflächenkapillarstruktur (68') der zumindest einen Welle (50a) und/oder des Optikträgers (30) selbstschmierend ist.

## Claims

1. Production method for a pendulum arrangement of a pendulum laser device (10), having at least
- a first method step (S10), in which a universal joint (32) of a pendulum (28) of the pendulum arrangement is produced by means of plastic injection molding, by forming two orthogonal, at least partially microstructured shafts (50a, 50b),
- a second method step (S110), in which at least two bearing shells (36a) are placed on the at least partially microstructured regions (68) of at least one shaft (50a) of the universal joint (32),
- a third method step (S14), in which an optics carrier (30) of the pendulum (28) of the pendulum arrangement is produced integrally with the bearing shells (36a) by overmolding, by means of plastic injection molding, at least two bearing shells (36a) surrounding a shaft (50a) of the universal joint (32), and is connected to the universal joint (32) such that it can rotate about the one shaft (50a).

2. Production method according to Claim 1, **characterized in that** the bearing shells (36a, 36b) are produced, in at least one further method step (S108), from a thermoplastic semifinished product, in particular from an extruded Teflon or polyoxymethylene or polyketone semifinished product.

3. Production method according to either one of Claims 1-2, **characterized in that** the bearing shells (36a, 36b) are heated before being overmolded by means of plastic injection molding, wherein the inner diameter of the bearing shells (36a, 36b) decreases due to thermal expansion.

4. Production method according to any one of Claims 1-3, in particular according to Claim 3, **characterized in that** the bearing shells (36a, 36b) are cooled after having been overmolded by means of plastic injection molding, wherein a thin gap (70) is produced in relation to the at least partially microstructured shafts (50a, 50b), due to the thermal contraction/shrinkage.

5. Production method according to any one of Claims 1-4, **characterized in that,** in a further method step (S140), a lubricant is introduced into the gap (70) between the bearing shell (36a, 36b) and the at least partially microstructured shaft (50a, 50b).

6. Production method according to any one of Claims 1-5, **characterized in that** at least one holder (46) is formed in the optics carrier (30), for holding a laser unit (20), by plastic injection molding, in particular by use of a means for producing an undercut (64).

7. Production method according to any one of Claims 1-6, **characterized in that,** in a further method step (S16), a pendulum suspension (34) is produced by means of plastic injection molding, in particular is produced as a two-part intermateable structural element.

8. Production method according to Claim 7, **characterized in that,** in a further method step (S142), the pendulum (28) is arranged such that it can oscillate on the pendulum suspension (34).

9. Production method according to Claim 7 or 8, **characterized in that,** in a further method step (S146), the pendulum arrangement, composed of the pendulum (28) and pendulum suspension (34), is mounted in a pendulum laser device (10).

10. Self-leveling pendulum laser device (10), having at least one housing (12), a pendulum (28) arranged such that it can oscillate in the housing (12) by means of the pendulum suspension (34), and at least one laser unit (20), attached to an optics carrier (30) of the pendulum (28), for generating at least one optical marking, in particular produced according to a method according to at least one of Claims 1-9, **characterized in that** a universal joint (32) of the pendulum (28) and the optics carrier (30) of the pendulum (28) are realized integrally by means of plastic injection molding, and the optics carrier (30) is connected to the universal joint (32) such that it can rotate, in particular oscillate, about at least one shaft (50a) of the universal joint (32), wherein the rotatable connection is self-lubricating by use of a surface capillary structure (68') of the at least one shaft (50a) and/or of the optics carrier (30).

## Revendications

1. Procédé de fabrication d'un agencement pendulaire d'un dispositif laser pendulaire (10), présentant au moins
• une première étape de procédé (S10), dans laquelle on fabrique un joint à cardan (32) d'un pendule (28) de l'agencement pendulaire au moyen d'une technique de coulée par injection de matière plastique avec formation de deux arbres orthogonaux, au moins en partie microstructurés (50a, 50b),
• une deuxième étape de procédé (S110), dans laquelle on place au moins deux coquilles de coussinet (36a) sur les régions au moins en partie microstructurées (68) d'au moins un arbre (50a) du joint à cardan (32),
• une troisième étape de procédé (S14), dans laquelle on fabrique un support optique (30) du pendule (28) de l'agencement pendulaire par projection d'au moins deux coquilles de coussinet (36a) entourant un arbre (50a) du joint à cardan (32) au moyen d'une technique de coulée par injection de matière plastique d'une seule pièce avec les coquilles de coussinet (36a) et on l'assemble au joint à cardan (32) d'une façon rotative autour dudit un arbre (50a).

2. Procédé de fabrication selon la revendication 1, **caractérisé en ce que** l'on fabrique les coquilles de coussinet (36a, 36b) dans au moins une autre étape de procédé (S108) à partir d'un demi-produit thermoplastique, en particulier à partir d'un demi-produit extrudé en téflon ou en polyoxyméthylène ou en polycétone.

3. Procédé de fabrication selon une des revendications 1 et 2, **caractérisé en ce que** l'on chauffe les coquilles de coussinet (36a, 36b) avant l'enrobage au moyen de la technique de coulée par injection de matière plastique, dans lequel le diamètre intérieur des coquilles de coussinet (36a, 36b) diminue par suite d'une expansion thermique.

4. Procédé de fabrication selon l'une quelconque des revendications 1 à 3, en particulier selon la revendication 3, **caractérisé en ce que** l'on refroidit les coquilles de coussinet (36a, 36b) après l'enrobage au moyen de la technique de coulée par injection de matière plastique, dans lequel il apparaît une fente mince (70) avec les arbres au moins en partie microstructurés (50a, 50b) par suite de contraction/retrait thermique.

5. Procédé de fabrication selon l'une quelconque des revendications 1 à 4, **caractérisé en ce que** dans une autre étape de procédé (S140) on introduit un lubrifiant dans la fente (70) entre une coquille de coussinet (36a, 36b) et un arbre au moins en partie microstructuré (50a, 50b).

6. Procédé de fabrication selon l'une quelconque des revendications 1 à 5, **caractérisé en ce que** pendant le procédé de coulée par injection de matière plastique on forme au moins un logement (46) dans le support optique (30) destiné à recevoir une unité laser (20), en particulier en utilisant un moyen de production d'une contre-dépouille (64).

7. Procédé de fabrication selon l'une quelconque des revendications 1 à 6, **caractérisé en ce que** dans une autre étape de procédé (S16) on fabrique une suspension pendulaire (34) au moyen de la technique de coulée par injection de matière plastique, en particulier on la fabrique sous la forme d'un composant en deux parties pouvant être emboîtées.

8. Procédé de fabrication selon la revendication 7, **caractérisé en ce que** dans une autre étape de procédé (S142) on dispose le pendule (28) de façon oscillante à la suspension pendulaire (34).

9. Procédé de fabrication selon une revendication 7 ou 8, **caractérisé en ce que** dans une autre étape de procédé (8146) on monte l'agencement pendulaire composé du pendule (28) et de la suspension pendulaire (34) dans un dispositif laser pendulaire (10).

10. Dispositif laser pendulaire à mise à niveau automatique (10), présentant au moins un boîtier (12), un pendule (28) disposé de façon oscillante dans le boîtier (12) au moyen de la suspension pendulaire (34) ainsi qu'au moins une unité laser (20) agencée sur un support optique (30) du pendule (28) pour la production d'au moins un marquage optique, en particulier fabriqué par un procédé selon l'une quelconque des revendications 1 à 9, **caractérisé en ce qu'**un joint à cardan (32) du pendule (28) et le support optique (30) du pendule (28) sont réalisés d'une seule pièce au moyen d'une technique de coulée par injection de matière plastique et le support optique (30) est assemblé au joint à cardan (32) de façon rotative, en particulier oscillante, autour d'au moins un arbre (50a) du joint à cardan (32), dans lequel l'assemblage rotatif est autolubrifiant par utilisation d'une structure capillaire superficielle (68') dudit au moins un arbre (50a) et/ou du support optique (30).
